(19) Europäisches Patentamt
European Patent Office
Office européen des brevets

(11) EP 4 528 641 A1

(12) EUROPEAN PATENT APPLICATION

(43) Date of publication:
26.03.2025 Bulletin 2025/13

(51) International Patent Classification (IPC):
G06T 7/579 (2017.01)   G06T 7/00 (2017.01)

(21) Application number: 24200061.0

(22) Date of filing: 12.09.2024

(52) Cooperative Patent Classification (CPC):
G06T 7/579; G06T 7/0004; G06T 2207/10068;
G06T 2207/30164

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.09.2023 JP 2023160040

(71) Applicant: Evident Corporation
Kamiina-gun, Nagano 399-0495 (JP)

(72) Inventors:
• SAKAMOTO, Yohei
Nagano 3990495 (JP)
• OGAWA, Kiyotomi
Nagano 3990495 (JP)

(74) Representative: Gunzelmann, Rainer
Wuesthoff & Wuesthoff
Patentanwälte und Rechtsanwalt PartG mbB
Schweigerstraße 2
81541 München (DE)

(54) **THREE-DIMENSIONAL DATA GENERATION SYSTEM, THREE-DIMENSIONAL DATA GENERATION METHOD, AND PROGRAM**

(57)     A processor of a three-dimensional data generation system is configured to determine whether two or more images include a graphics region in which graphics information is superimposed. The processor is configured to execute first processing when the two or more images do not include the graphics region. The first processing includes generation processing of generating the three-dimensional data by using the two or more images. The processor is configured to execute second processing when at least one image of the two or more images includes the graphics region. The second processing includes processing of preventing the graphics region in the at least one image from contributing to generation of the three-dimensional data.

FIG. 6

```
                    START
                      │
                      ▼          ┌─ S100
            ACQUIRE VIDEO
                      │          ┌─ S101
      ACQUIRE TYPE INFORMATION OF
         INSPECTION EQUIPMENT
                      │          ┌─ S102
  ACQUIRE SETTING INFORMATION INDICATING
 SUPERIMPOSITION STATE OF GRAPHICS INFORMATION
                      │          ┌─ S103
         NO      ╱ IS GRAPHICS  ╲
      ┌──────────   INFORMATION
      │          ╲ SUPERIMPOSED? ╱
      │                │ YES
      │                ▼          ┌─ S104
      │  ACQUIRE INFORMATION INDICATING SUPERIMPOSITION
      │     STATE OF SUB-GRAPHICS INFORMATION
      │                │          ┌─ S105
      │   DETERMINE WHETHER SUB-GRAPHICS
      │      INFORMATION IS SUPERIMPOSED
      │                │          ┌─ S106
      │       IDENTIFY GRAPHICS REGION
      │                │          ┌─ S107
      │   SET GRAPHICS REGION AS INEFFECTIVE REGION
      │                │
      └────────────────┤
                       ▼          ┌─ S108
        EXECUTE 3D RECONSTRUCTION PROCESSING
                       │          ┌─ S109
           DISPLAY IMAGE OF 3D DATA
                       │
                       ▼
                     END
```

EP 4 528 641 A1

## Description

[Technical Field]

The present invention relates to a three-dimensional data generation system, a three-dimensional data generation method, and a program.

[Background Art]

Industrial endoscope devices have been used for inspection of abnormalities (damage, corrosion, and the like) occurring inside industrial equipment such as boilers, turbines, engines, pipes, and the like. Various subjects are targets for inspection using industrial endoscope devices.

In general, an industrial endoscope device uses a monocular optical adaptor and a measurement-dedicated optical adaptor. The monocular optical adaptor is used for normal observation of a subject. The measurement-dedicated optical adaptor is used for reconstruction of three-dimensional (3D) information of a subject. For example, the measurement-dedicated optical adaptor is a stereo optical adaptor having two visual fields. The industrial endoscope device can measure the size of a detected abnormality by using the 3D information. A user can check the shape (unevenness or the like) of the subject reconstructed by using the 3D information. As described above, the 3D information contributes to improving the quality of inspection and streamlining inspection.

In recent years, a technique of acquiring two or more images of a subject by using a monocular optical adaptor and reconstructing 3D information of the subject by using the images has been developed. Such a technique estimates a change of relative movement of a distal end portion of an endoscope to the subject, executes 3D reconstruction processing based on the results of the estimation, and reconstruct the 3D information. According to such a technique, it is possible to acquire the 3D information without the replacement from a monocular optical adaptor to a stereo optical adaptor. Therefore, the inspection efficiency is improved.

An industrial endoscope device can superimpose a character, an icon, or the like called on-screen display (OSD) information on a still image and a video. Hereinafter, the OSD information is called graphics information. The graphics information includes the type of optical adaptor, the brightness of an image, a date, a logo, a zoom state, and the like.

The position of an image region in which graphics information is superimposed varies in accordance with the type of endoscope device. In addition, the type of graphics information varies in accordance with the type of endoscope device. For example, information of an insertion length indicating an observation position is important in an endoscope device including a long insertion unit having the length of 30 m, and thus the insertion length is superimposed and displayed on an image. The insertion length is not displayed in an endoscope device including a short insertion unit. A user can set whether each item of the graphics information is to be superimposed on an image by operating a setting screen displayed on a monitor.

The use can easily check conditions under which an image is acquired by observing the image on which the graphics information is superimposed. Therefore, the graphics information is useful for reporting inspection results or managing data.

Patent Literature 1 discloses a device that executes the 3D reconstruction processing by using the following method. The device uses two or more images acquired in a state in which a monocular optical adaptor is used. In addition, the device detects a distinctive small region (feature region) in the two or more images and analyzes movement of the small region. The small region corresponds to the same position of a subject seen in each of the images. The device executes the 3D reconstruction processing in accordance with the movement of the small region.

[Citation List]

[Patent Literature]

[Patent Literature 1]

Japanese Unexamined Patent Application, First Publication No. 2020-134242

[Summary of Invention]

[Technical Problem]

In a case in which images on which graphics information is superimposed are used for the above-described 3D reconstruction processing, the following problem occurs. In a region in which graphics information is not superimposed, a small region moves in accordance with the movement of a subject or a distal end of an endoscope. However, in a region (graphics region) in which the graphics information is superimposed, the graphics information does not change, and thus a small region does not move regardless of the movement of the subject or the distal end of the endoscope when the small region is detected in the graphics region. As a result, the 3D reconstruction processing fails or 3D information is not accurately reconstructed in the graphics region.

In order to solve this problem, it is conceivable that only a region other than a region at the same position as the graphics region be used for the 3D reconstruction processing regardless of whether graphics information is superimposed on an image. However, with this method, since a region used for the 3D reconstruction processing is small in an image on which graphics information is not superimposed, a region of which 3D information is reconstructed is also small.

An object of the present invention is to provide a three-dimensional data generation system, a three-dimensional data generation method, and a program that can avoid failure of processing of generating three-dimensional data indicating a three-dimensional shape inside an object or can avoid deterioration of accuracy of the three-dimensional data.

[Solution to Problem]

A three-dimensional data generation system according to an aspect of the present invention is configured to generate three-dimensional data indicating a three-dimensional shape inside an object. The three-dimensional data generation system includes an imaging apparatus, an image-processing device, and a processor. The imaging apparatus includes a tubular insertion unit configured to acquire an optical image inside the object and is configured to generate two or more images of the object in a state in which the insertion unit is inserted inside the object. The image-processing device is configured to superimpose graphics information on at least one image of the two or more images. The processor is configured to: acquire the two or more images; determine whether the two or more images include a graphics region in which the graphics information is superimposed; and execute first processing when it is determined that the two or more images do not include the graphics region. The first processing includes generation processing of generating the three-dimensional data by using the two or more images. The processor is configured to execute second processing when it is determined that at least one image of the two or more images includes the graphics region. The second processing includes processing of preventing the graphics region in the at least one image from contributing to generation of the three-dimensional data.

In the three-dimensional data generation system according to an aspect of the present invention, the second processing may include processing of setting the graphics region in the at least one image as an ineffective region.

In the three-dimensional data generation system according to an aspect of the present invention, the second processing may include the generation processing in which a region other than the ineffective region in the at least one image is used.

In the three-dimensional data generation system according to an aspect of the present invention, the second processing may include processing of setting the graphics region as the ineffective region based on setting information and position information. The setting information indicates an item corresponding to the graphics information superimposed on the at least one image. The position information indicates the position of the graphics region in which the graphics information corresponding to the item is superimposed.

In the three-dimensional data generation system according to an aspect of the present invention, the second processing may include processing of setting the graphics region as the ineffective region based on type information, setting information, and position information. The type information indicates the type of imaging apparatus. The setting information is prepared for each type of imaging apparatus and indicates an item corresponding to the graphics information superimposed on the at least one image. The position information indicates the position of the graphics region in which the graphics information corresponding to the item is superimposed.

In the three-dimensional data generation system according to an aspect of the present invention, the processor may be configured to receive the type information and the setting information input through an input device.

In the three-dimensional data generation system according to an aspect of the present invention, the generation processing may include detection processing of detecting a feature point from the two or more images. The second processing may include: processing of changing an image in the ineffective region such that a feature point is not detected from the ineffective region; and the generation processing in which the two or more images are used.

In the three-dimensional data generation system according to an aspect of the present invention, the generation processing may include detection processing of detecting a feature point from the two or more images. The second processing may include processing of excluding the ineffective region from a region in which the detection processing is executed.

In the three-dimensional data generation system according to an aspect of the present invention, the second processing may include processing of canceling execution of the generation processing.

In the three-dimensional data generation system according to an aspect of the present invention, the generation processing may include detection processing of detecting a feature point from the two or more images. The second processing may include processing of deleting a feature point detected from the ineffective region.

In the three-dimensional data generation system according to an aspect of the present invention, a storage medium may store two or more images, generated by the imaging apparatus, on which the graphics information is not superimposed by the image-processing device. The second processing may include the generation processing in which the two or more images stored on the storage medium are used.

In the three-dimensional data generation system according to an aspect of the present invention, the processor may be configured to determine whether the two or more images include the graphics region based on setting information indicating whether the graphics information is superimposed on each of the two or more images.

In the three-dimensional data generation system according to an aspect of the present invention, the processor may be configured to: perform, on the two or more images, image processing of detecting the graphics region; and determine whether the two or more images include the graphics region based on a result of the image processing.

In the three-dimensional data generation system according to an aspect of the present invention, the graphics information may include at least one of type of optical adaptor attached to a distal end of the insertion unit, brightness of an image generated by the imaging apparatus, a date, a mark, and a magnification of an image generated by the imaging apparatus.

In the three-dimensional data generation system according to an aspect of the present invention, the processor may be configured to acquire the two or more images from a storage medium after the two or more images are stored on the storage medium.

In the three-dimensional data generation system according to an aspect of the present invention, the insertion unit may include a lens and an image sensor.

In the three-dimensional data generation system according to an aspect of the present invention, the lens and the image sensor may be built in a distal end of the insertion unit. The positions of the distal end when the two or more images are generated may be different from each other. The orientations of the distal end when the two or more images are generated may be different from each other.

In the three-dimensional data generation system according to an aspect of the present invention, the imaging apparatus, the image-processing device, and the processor may be included in an endoscope device.

In the three-dimensional data generation system according to an aspect of the present invention, the imaging apparatus and the image-processing device may be included in an endoscope device. The processor may be included in an external device that is separate from the endoscope device.

In the three-dimensional data generation system according to an aspect of the present invention, the imaging apparatus may be configured to generate the two or more images based on an optical image formed through a monocular optical adaptor attached to a distal end of the insertion unit.

In the three-dimensional data generation system according to an aspect of the present invention, the same region of a component of the object may be seen in at least two images included in the two or more images.

According to an aspect of the present invention, a three-dimensional data generation method of generating three-dimensional data indicating a three-dimensional shape inside an object is provided. The three-dimensional data generation method includes acquiring two or more images of the object by using a processor. The two or more images are generated by an imaging apparatus that includes a tubular insertion unit configured to acquire an optical image inside the object and is configured to generate the two or more images in a state in which the insertion unit is inserted inside the object. The three-dimensional data generation method includes: determining by using the processor whether the two or more images include a graphics region in which graphics information is superimposed by an image-processing device; and executing first processing by using the processor when it is determined that the two or more images do not include the graphics region. The first processing includes generation processing of generating the three-dimensional data by using the two or more images. The three-dimensional data generation method includes executing second processing by using the processor when it is determined that at least one image of the two or more images includes the graphics region. The second processing includes processing of preventing the graphics region in the at least one image from contributing to generation of the three-dimensional data.

According to an aspect of the present invention, a program causing a computer to execute processing of generating three-dimensional data indicating a three-dimensional shape inside an object is provided. The processing includes acquiring two or more images of the object. The two or more images are generated by an imaging apparatus that includes a tubular insertion unit configured to acquire an optical image inside the object and is configured to generate the two or more images in a state in which the insertion unit is inserted inside the object. The processing includes: determining whether the two or more images include a graphics region in which graphics information is superimposed by an image-processing device; and executing first processing when it is determined that the two or more images do not include the graphics region. The first processing includes generation processing of generating the three-dimensional data by using the two or more images. The processing includes executing second processing when it is determined that at least one image of the two or more images includes the graphics region. The second processing includes processing of preventing the graphics region in the at least one image from contributing to generation of the three-dimensional data.

[Advantageous Effects of Invention]

According to the present invention, the three-dimensional data generation system, the three-dimensional data generation method, and the program can avoid failure of processing of generating three-dimensional data indicating a three-dimensional shape inside an object or can avoid deterioration of accuracy of the three-dimensional data.

[Brief Description of Drawings]

[FIG 1] FIG 1 is a perspective view showing an entire configuration of an endoscope device according to a first embodiment of the present invention.
[FIG 2] FIG 2 is a block diagram showing an internal configuration of the endoscope device according to the first embodiment of the present invention.
[FIG 3] FIG 3 is a diagram schematically showing the disposition of rotors and stators inside a turbine in the first embodiment of the present invention.
[FIG 4] FIG 4 is a diagram schematically showing the disposition of the rotors inside the turbine in the first embodiment of the present invention.
[FIG 5] FIG 5 is a block diagram showing a functional configuration of a CPU included in the endoscope device according to the first embodiment of the present invention.
[FIG 6] FIG 6 is a flow chart showing a procedure of three-dimensional (3D) data generation processing in the first embodiment of the present invention.
[FIG 7] FIG 7 is a diagram showing an example of a superimposition state table in the first embodiment of the present invention.
[FIG 8] FIG 8 is a diagram showing an example of a coordinate table in the first embodiment of the present invention.
[FIG 9] FIG 9 is a diagram showing an example of the position of a graphics region in the first embodiment of the present invention.
[FIG 10] FIG 10 is a diagram showing an example of a screen of a display unit included in the endoscope device according to the first embodiment of the present invention.
[FIG 11] FIG 11 is a diagram showing an example of a graphics region in an image generated by an imaging device included in the endoscope device according to the first embodiment of the present invention.
[FIG 12] FIG 12 is a schematic diagram showing a situation in which an image is acquired in the first embodiment of the present invention.
[FIG 13] FIG 13 is a flow chart showing a procedure of 3D reconstruction processing in the first embodiment of the present invention.
[FIG 14] FIG 14 is a diagram showing an example of a screen of a display unit included in an endoscope device according to a second embodiment of the present invention.
[FIG 15] FIG 15 is a diagram showing an example of the screen of the display unit included in the endoscope device according to the second embodiment of the present invention.
[FIG 16] FIG 16 is a perspective view showing an entire configuration of an endoscope system according to a third embodiment of the present invention.
[FIG 17] FIG 17 is a block diagram showing a functional configuration of an external device according to the third embodiment of the present invention.
[FIG 18] FIG 18 is a flow chart showing a procedure of processing executed by an endoscope device according to the third embodiment of the present invention.
[FIG 19] FIG 19 is a flow chart showing a procedure of processing executed by the external device according to the third embodiment of the present invention.

[Description of Embodiments]

Hereinafter, embodiments of the present invention will be described with reference to the drawings.

(First embodiment)

A first embodiment of the present invention will be described. In the first embodiment, an example in which a three-dimensional (3D) data generation device is included in an endoscope device will be described. Hereinafter, an example in which an inspection target is a turbine will be described. The following example can also be applied to a case in which the inspection target is a boiler, a turbine, an engine, a pipe, or the like.

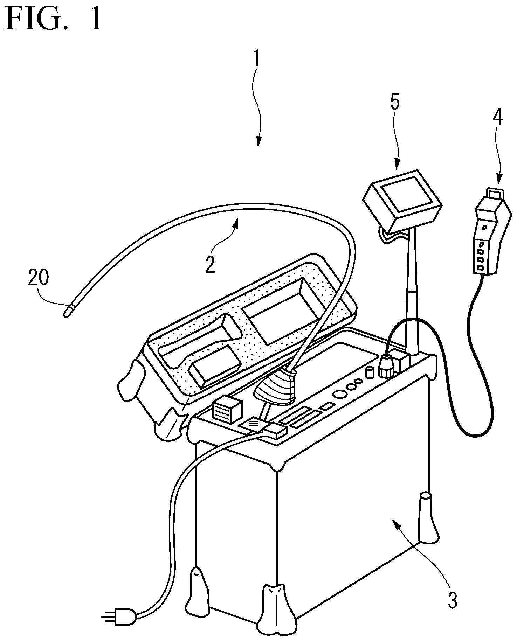

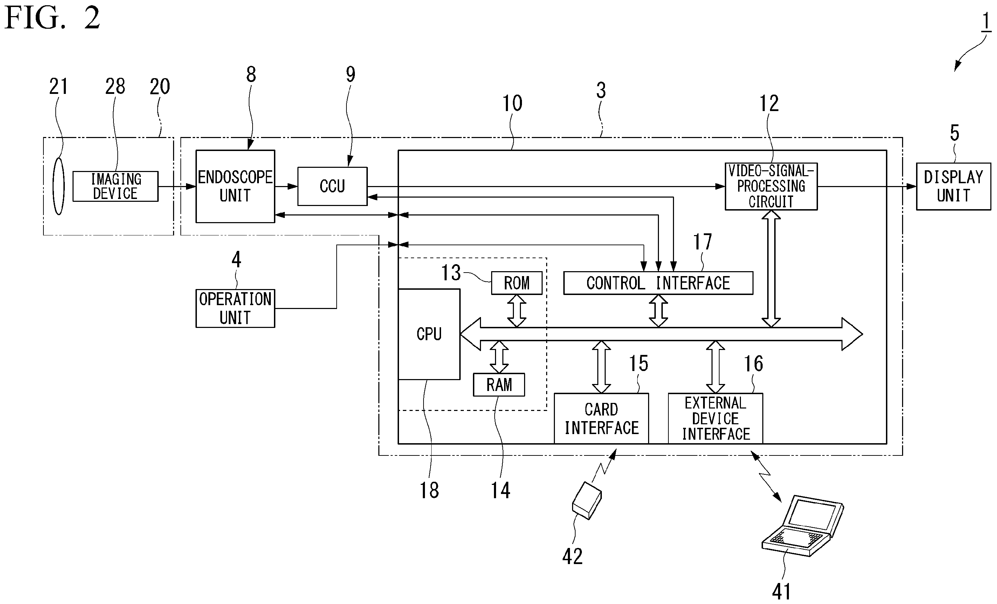

A configuration of an endoscope device 1 in the first embodiment will be described by using FIG 1 and FIG 2. FIG 1 shows an external appearance of the endoscope device 1. FIG 2 shows an internal configuration of the endoscope device 1.

The endoscope device 1 shown in FIG 1 includes an insertion unit 2, a main body unit 3, an operation unit 4, and a display unit 5. The endoscope device 1 images a subject inside an inspection target and generates an image. The subject is an industrial product. In order to inspect various inspection targets, a user can replace an optical adaptor mounted at a distal end 20 of the insertion unit 2, select a built-in video-processing program, and add a video-processing program.

The insertion unit 2 is inserted inside an inspection target. The insertion unit 2 has a long and thin bendable tubular shape from the distal end 20 to a base end portion. The insertion unit 2 images a subject and outputs an imaging signal to the main body unit 3. An optical adaptor is mounted on the distal end 20 of the insertion unit 2. For example, a monocular optical adaptor is mounted on the distal end 20. The main body unit 3 is a control device including a housing unit that houses the insertion unit 2. The operation unit 4 receives an operation for the endoscope device 1 from a user. The display unit 5 includes a display screen and displays an image of a subject acquired by the insertion unit 2, an operation menu, and the like on the display screen.

The operation unit 4 is a user interface. The display unit 5 is a monitor (display) such as a liquid crystal display (LCD). The display unit 5 may be a touch panel. In such a case, the operation unit 4 and the display unit 5 are integrated.

The main body unit 3 shown in FIG 2 includes an endoscope unit 8, a camera control unit (CCU) 9, and a control device 10.

The endoscope unit 8 includes a light source device and a bending device that are not shown in the drawing. The light source device provides the distal end 20 with illumination light that is necessary for observation. The bending device bends a bending mechanism that is built in the insertion unit 2.

A lens 21 and an imaging device 28 are built in the distal end 20 of the insertion unit 2. The lens 21 is an observation optical system. The lens 21 captures an optical image of a subject formed by an optical adaptor. The imaging device 28 is an image sensor. The imaging device 28 photo-electrically converts the optical image of the subject and generates an imaging signal. The lens 21 and the imaging device 28 constitute a monocular camera having a single viewpoint.

The CCU 9 drives the imaging device 28. An imaging signal output from the imaging device 28 is input into the CCU 9. The CCU 9 performs pre-processing including amplification, noise elimination, and the like on the imaging signal acquired by the imaging device 28. The CCU 9 converts the imaging signal on which the pre-processing has been executed into a video signal such as an NTSC signal.

The control device 10 includes a video-signal-processing circuit 12, a read-only memory (ROM) 13, a random-access memory (RAM) 14, a card interface 15, an external device interface 16, a control interface 17, and a central processing unit (CPU) 18.

The video-signal-processing circuit 12 performs predetermined video processing on the video signal output from the CCU 9. For example, the video-signal-processing circuit 12 performs video processing related to improvement of visibility. For example, the video processing is color reproduction, gray scale correction, noise suppression, contour enhancement, and the like. For example, the video-signal-processing circuit 12 combines the video signal output from the CCU 9 and information generated by the CPU 18. The video-signal-processing circuit 12 outputs a combined video signal to the display unit 5.

In a case in which graphics information is output from the CPU 18, the video-signal-processing circuit 12 superimposes the graphics information on the video signal. The video-signal-processing circuit 12 outputs the video signal on which the graphics information is superimposed to the display unit 5. The video-signal-processing circuit 12 may be constituted by at least one of a processor and a logic circuit described later.

The ROM 13 is a nonvolatile recording medium on which a program for causing the CPU 18 to control the operation of the endoscope device 1 is recorded. The RAM 14 is a volatile recording medium that temporarily stores information used by the CPU 18 for controlling the endoscope device 1. The CPU 18 controls the operation of the endoscope device 1 based on the program recorded on the ROM 13.

A memory card 42 is connected to the card interface 15. The memory card 42 is a recording medium that is attachable to and detachable from the endoscope device 1. The card interface 15 inputs control-processing information, image information, and the like stored on the memory card 42 into the control device 10. In addition, the card interface 15 records the control-processing information, the image information, and the like generated by the endoscope device 1 on the memory card 42.

An external device such as a USB device is connected to the external device interface 16. For example, a personal computer (PC) 41 is connected to the external device interface 16. The external device interface 16 transmits information to the PC 41 and receives information from the PC 41. By doing this, the PC 41 can display information. In addition, by inputting an instruction into the PC 41, a user can perform an operation related to control of the endoscope device 1.

The control interface 17 performs communication with the operation unit 4, the endoscope unit 8, and the CCU 9 for operation control. The control interface 17 notifies the CPU 18 of information input into the operation unit 4 by the user. The control interface 17 outputs control signals used for controlling the light source device and the bending device to the endoscope unit 8. The control interface 17 outputs a control signal used for controlling the imaging device 28 to the CCU 9.

A program executed by the CPU 18 may be recorded on a computer-readable recording medium. The program recorded on this recording medium may be read and executed by a computer other than the endoscope device 1. For example, the program may be read and executed by the PC 41. The PC 41 may control the endoscope device 1 by transmitting control information used for controlling the endoscope device 1 to the endoscope device 1 in accordance with the program. Alternatively, the PC 41 may acquire a video signal from the endoscope device 1 and may process the acquired video signal.

The insertion unit 2 constitutes an imaging apparatus (camera). The imaging device 28 may be disposed in the main body unit 3, and an optical fiber may be disposed in the insertion unit 2. Light incident on the lens 21 may reach the imaging device 28 via the optical fiber. A borescope may be used as a camera.

Turbines are used for aircraft engines or power generators. There are gas turbines, steam turbines, or the like. Hereinafter, a structure of a gas turbine will be described. Hereinafter, the gas turbine will be called a turbine.

A turbine includes a compressor section, a combustion chamber, and a turbine section. Air is compressed in the compressor section. The compressed air is sent to the combustion chamber. Fuel continuously burns in the combustion chamber, and gas of high pressure and high temperature is generated. The gas expands in the turbine section and generates energy. A compressor rotates by using the energy, and the rest of the energy is extracted. In the compressor section and the turbine section, a rotor fixed to a rotation axis of an engine and a stator fixed to a casing are alternately disposed.

The turbine includes a component disposed in a space inside the turbine. The component is a moving object capable of moving inside the turbine or is a stationary object that stands still inside the turbine. The moving object is a rotor. The stationary object is a stator or a shroud.

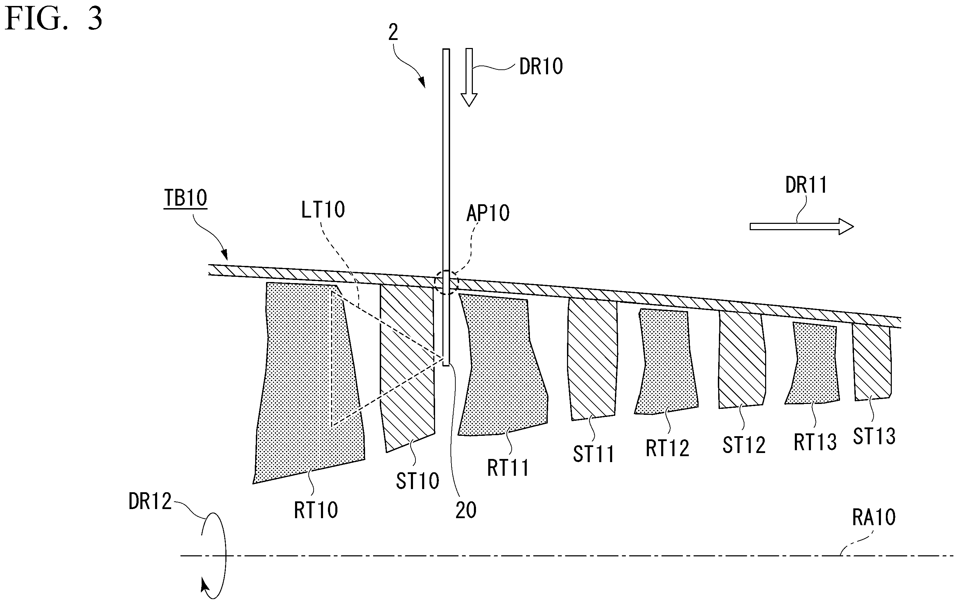

FIG 3 schematically shows the disposition of rotors and stators in a compressor section of a turbine TB10. FIG 3 shows part of a cross-section of the turbine TB10 passing through a rotation axis RA10 of an engine. The turbine TB10 includes a rotor RT10, a stator ST10, a rotor RT11, a stator ST11, a rotor RT12, a stator ST12, a rotor RT13, and a stator ST13 in the compressor section. These rotors rotate in a direction DR12 around the rotation axis RA10.

Air introduced into the turbine TB10 flows in a direction DR11. The rotor RT10 is disposed in a low-pressure section that introduces air. The rotor RT13 is disposed in a high-pressure section that expels air.

An access port AP10 is formed to enable internal inspection of the turbine TB10 without disassembling the turbine TB10. The turbine TB10 includes two or more access ports, and one of the two or more access ports is shown as the access port AP10 in FIG 3. The access port AP10 is a hole formed in the turbine TB10.

The insertion unit 2 constitutes an endoscope. The insertion unit 2 is inserted into the turbine TB10 through the access port AP10. When the insertion unit 2 is inserted into the turbine TB10, the insertion unit 2 moves in a direction DR10. When the insertion unit 2 is pulled out of the turbine TB10, the insertion unit 2 moves in an opposite direction to the direction DR10. The direction DR10 is different from the direction DR12. Illumination light LT10 is emitted from the distal end 20 of the insertion unit 2.

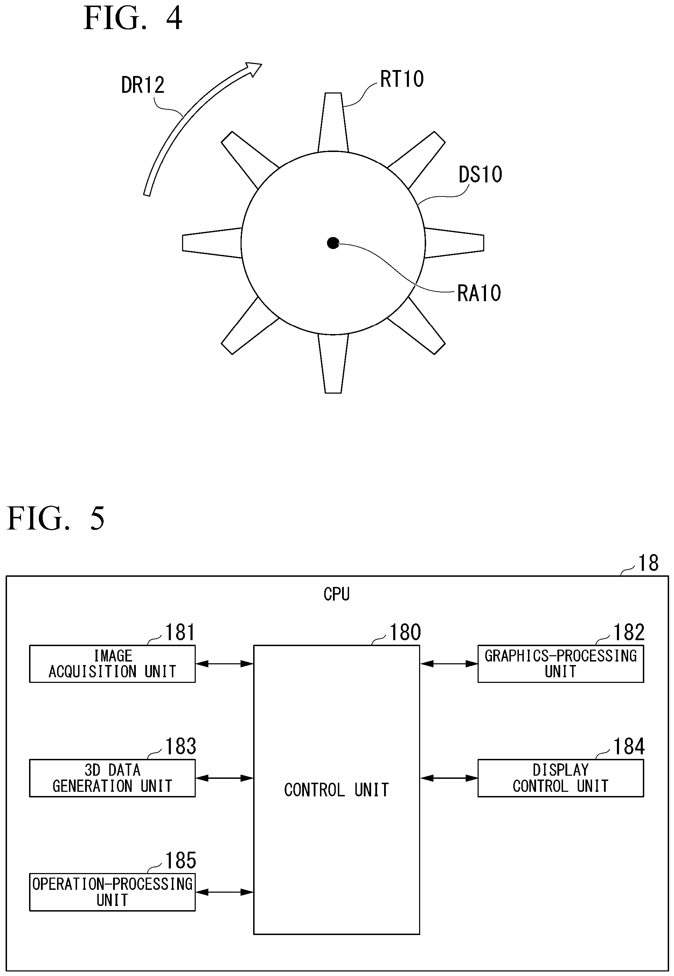

FIG 4 schematically shows the disposition of two or more rotors RT10 seen in a parallel direction to a rotation axis RA10. In FIG 4, eight rotors RT10 are disposed in a disk DS10. The rotation axis RA10 passes through the center of the disk DS10. The disk DS10 rotates in a direction DR12. Therefore, the eight rotors RT10 rotate in the direction DR12.

Several tens of rotors or more than 100 rotors are actually disposed in one disk. The number of rotors in one disk depends on the type of engine and also depends on the position of the disk in a region ranging from a low-pressure section to a high-pressure section.

When rotors of a turbine are inspected, a user manually rotates a disk, or a device called a turning tool rotates the disk. The insertion unit 2 is inserted into the turbine TB 10 through the access port AP10, and the distal end 20 is fixed. When the disk is rotating, the user performs inspection of two or more rotors and determines whether there is an abnormality in each rotor. This inspection is one of major inspection items in inspection of a turbine.

The imaging device 28 generates two or more images. Each of the two or more images is temporally associated with the other images included in the two or more images. For example, each of the two or more images is a still image. A video may be used instead of the still image. Two or more images (frames) included in the video are associated with each other by timestamps (timecodes).

The RAM 14 stores the two or more images generated by the imaging device 28. In addition, the RAM 14 stores necessary parameters for 3D reconstruction processing. The parameters include an internal parameter of a camera, a distortion correction parameter of the camera, a setting value, scale information, and the like. The setting value is used for various kinds of processing of generating 3D data indicating a 3D shape of a subject. The scale information is used for converting the scale of the 3D data into an actual scale of the subject.

The memory card 42 may store the two or more images and the above-described parameters. The endoscope device 1 may read the two or more images and the parameters from the memory card 42 and may store the two or more images and the parameters on the RAM 14.

The endoscope device 1 may perform wireless or wired communication with an external device via the external device interface 16. The external device is the PC 41, a cloud server, or the like. The endoscope device 1 may transmit the two or more images generated by the imaging device 28 to the external device. The external device may store the two or more images and the above-described parameters. The endoscope device 1 may receive the two or more images and the parameters from the external device and store the two or more images and the parameters on the RAM 14.

As described above, the endoscope device 1 includes the imaging device 28 and the CPU 18. The imaging device 28 images a subject and generates an imaging signal. Accordingly, the imaging device 28 acquires an image of the subject generated by imaging the subject. The image is a two-dimensional (2D) image. The image acquired by the imaging device 28 is input into the CPU 18 via the video-signal-processing circuit 12.

FIG 5 shows a functional configuration of the CPU 18. The CPU 18 functions as a control unit 180, an image acquisition unit 181, a graphics-processing unit 182, a 3D data generation unit 183, a display control unit 184, and an operation-processing unit 185. At least one of the blocks shown in FIG 5 may be constituted by a different circuit from the CPU 18.

The control unit 180 controls processing executed by each unit shown in FIG 5.

The image acquisition unit 181 acquires the two or more images and the above-described parameters from the RAM 14. The image acquisition unit 181 may acquire the two or more images and the above-described parameters from the memory card 42 or the external device via the external device interface 16.

The graphics-processing unit 182 determines whether the two or more images acquired by the image acquisition unit 181 include a graphics region in which the graphics information is superimposed. When it is determined that an image includes the graphics region, the graphics-processing unit 182 prevents the graphics region in the image from contributing to generation of the 3D data.

The 3D data generation unit 183 executes the 3D reconstruction processing by using the two or more images acquired by the image acquisition unit 181 and generates 3D data.

The 3D data include 3D coordinates of two or more points (3D point cloud) of a subject and also include a camera coordinate and orientation information. The 3D data may include meshes, each of which is a plane having a 3D point cloud at vertices, and may include mesh polygon data that are a set of texture information associated with the meshes. The camera coordinate indicates 3D coordinates of a camera that has acquired each of the two or more images and are associated with each of the two or more images. The camera coordinate indicates 3D coordinates of a viewpoint when each image is acquired and indicates the position of a camera. For example, the camera coordinate indicates 3D coordinates of an observation optical system included in the camera. The orientation information indicates the orientation (posture) of the camera that has acquired each of the two or more images and is associated with each of the two or more images. For example, the orientation information indicates the orientation of the observation optical system included in the camera.

The display control unit 184 controls processing executed by the video-signal-processing circuit 12. The CCU 9 outputs a video signal. The video signal includes color data of each pixel of an image generated by the imaging device 28. The display control unit 184 causes the video-signal-processing circuit 12 to output the video signal output from the CCU 9 to the display unit 5. The video-signal-processing circuit 12 outputs the video signal to the display unit 5. The display unit 5 displays an image based on the video signal output from the video-signal-processing circuit 12. By doing this, the display control unit 184 displays the image generated by the imaging device 28 on the display unit 5.

The display control unit 184 displays various kinds of information on the display unit 5. In other words, the display control unit 184 displays various kinds of information on an image.

For example, the display control unit 184 generates various kinds of information. The various kinds of information are an image of an operation screen, graphics information, and the like. The display control unit 184 outputs the generated information to the video-signal-processing circuit 12. The video-signal-processing circuit 12 combines the video signal output from the CCU 9 and the information output from the CPU 18. Due to this, the various kinds of information are superimposed on an image. The video-signal-processing circuit 12 outputs the combined video signal to the display unit 5. The display unit 5 displays an image on which the various kinds of information are superimposed.

In addition, the display control unit 184 generates image information of the 3D data. The display control unit 184 outputs the image information to the video-signal-processing circuit 12. Similar processing to that described above is executed, and the display unit 5 displays an image of the 3D data. By doing this, the display control unit 184 displays the image of the 3D data on the display unit 5.

A user inputs various kinds of information into the endoscope device 1 by operating the operation unit 4. The operation unit 4 outputs the information input by the user. The information is input to the control interface 17 that is an input unit. The information is output from the control interface 17 to the CPU 18. The operation-processing unit 185 receives the information input into the endoscope device 1 via the operation unit 4.

Each unit shown in FIG 5 may be constituted by at least one of a processor and a logic circuit. For example, the processor is at least one of a central processing unit (CPU), a digital signal processor (DSP), and a graphics-processing unit (GPU). For example, the logic circuit is at least one of an application-specific integrated circuit (ASIC) and a field-programmable gate array (FPGA). Each unit shown in FIG 5 may include one or a plurality of processors. Each unit shown in FIG 5 may include one or a plurality of logic circuits.

A computer of the endoscope device 1 may read a program and may execute the read program. The program includes commands defining the operations of each unit shown in FIG 5. In other words, the functions of each unit shown in FIG 5 may be realized by software.

The program described above, for example, may be provided by using a "computer-readable storage medium" such as a flash memory. The program may be transmitted from the computer storing the program to the endoscope device 1 through a transmission medium or transmission waves in a transmission medium. The "transmission medium" transmitting the program is a medium having a function of transmitting information. The medium having the function of transmitting information includes a network (communication network) such as the Internet and a communication circuit line (communication line) such as a telephone line. The program described above may realize some of the functions described above. In addition, the program described above may be a differential file (differential program). The functions described above may be realized by a combination of a program that has already been recorded in a computer and a differential program.

The graphics information is constituted by a character, a numeral, a symbol, a mark, or the like generated by a computer. In the following examples, the graphics information includes sub-graphics information of two or more items. The two or more items are the optical adaptor type, the brightness, the date, a company logo, or a zoom state. The optical adaptor type indicates the type of optical adaptor attached to the distal end 20. The brightness indicates the brightness of an image on which the graphics information is superimposed. The company logo is a predetermined mark of a company that produces or sells the endoscope device 1. The date indicates a date on which the image is generated. The zoom state indicates the magnification of the image. The sub-graphics information of each item is superimposed in a graphics region of each item.

The graphics information is included in a header or a footer as meta-data of a video file. Alternatively, the graphics information is included in exchangeable image file format (EXIF) information attached to a still image file.

The position of an image region in which the graphics information is superimposed varies in accordance with the type of inspection equipment that generates an image. The meta-data of the video file or the EXIF information of the still image file includes type information indicating the type of inspection equipment.

The diameter or the length of the insertion unit 2 may vary in accordance with the type of inspection equipment. Alternatively, the optical adaptor may vary in accordance with the type of inspection equipment. The diameter of the insertion unit 2, the length of the insertion unit 2, or the information of the optical adaptor may be used as the type information.

The meta-data of the video file or the EXIF information of the still image file includes setting information indicating the setting of the graphics information. The setting information includes information indicating whether the graphics information is superimposed on each image. In other words, the setting information includes information indicating whether each image includes a graphics region. In a case in which the setting information includes the information indicating whether the graphics information is superimposed on each image, the setting information includes information indicating whether the sub-graphics information of each item is superimposed on each image.

Hereinafter, distinctive processing of the first embodiment will be described. In the following descriptions, it is assumed that 3D data are generated by using two or more images acquired by endoscope equipment. Inspection equipment that acquires two or more images is not limited to the endoscope equipment. As long as an image of a component inside a turbine is acquired by using equipment including a camera, any equipment may be used.

The control device 10 functions as a 3D data generation device. A 3D data generation device according to each aspect of the present invention may be a computer system such as a PC that is separate from endoscope equipment. The 3D data generation device may be any one of a desktop PC, a laptop PC, and a tablet terminal. The 3D data generation device may be a computer system that operates on a cloud.

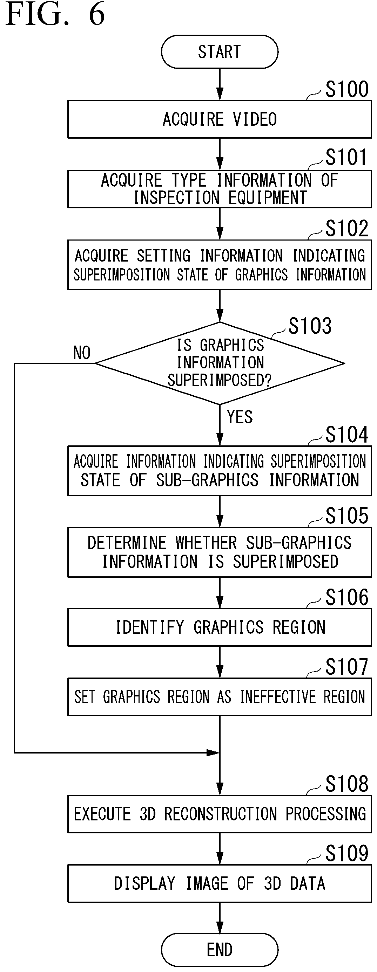

Processing executed by the endoscope device 1 will be described by using FIG 6. FIG 6 shows a procedure of 3D data generation processing executed by the endoscope device 1.

Hereinafter, an example in which a video of which the header stores meta-data is used will be described. Two or more still images may be used instead of the video.

The imaging device 28 sequentially generates an imaging signal. In other words, the imaging device 28 generates an imaging signal of each frame corresponding to the video. The video includes two or more frames. Each of the frames is constituted by an image acquired by the imaging device 28. When the imaging device 28 has completed imaging, a video file including the video is recorded on the PC 41 or the memory card 42.

Hereinafter, an example in which the video file recorded on the PC 41 or the memory card 42 is used in the 3D reconstruction processing will be described. The CPU 18 may execute the 3D reconstruction processing in real time at the same time as the imaging device 28 generates a video.

When the processing shown in FIG 6 has been started, the video file is input from the PC 41 into the RAM 14 via the external device interface 16. Alternatively, the video file is input from the memory card 42 into the RAM 14 via the card interface 15. The image acquisition unit 181 acquires a video included in the video file from the RAM 14 (Step S100).

After Step S100, the graphics-processing unit 182 acquires the type information indicating the type of inspection equipment from the header of the video file (Step S101).

After Step S101, the graphics-processing unit 182 acquires the setting information indicating whether the graphics information is superimposed in the video from the header of the video file (Step S102). The setting information includes information indicating whether the graphics information is superimposed in the video.

After Step S102, the graphics-processing unit 182 refers to the setting information acquired in Step S102 and determines whether the graphics information is superimposed in the video. By doing this, the graphics-processing unit 182 determines whether the video includes a graphics region (Step S103). When the graphics-processing unit 182 has determined in Step S103 that no graphics information is superimposed in the video, Step S108 described later is executed.

When the graphics-processing unit 182 has determined in Step S103 that the graphics information is superimposed in the video, the graphics-processing unit 182 acquires, from the setting information, information indicating whether the sub-graphics information of each item is superimposed on each frame (Step S104). As described above, in a case in which the setting information includes the information indicating whether the graphics information is superimposed on each image, the setting information includes the information indicating whether the sub-graphics information of each item is superimposed on each frame.

After Step S104, the graphics-processing unit 182 refers to the information acquired in Step S104 and determines whether the sub-graphics information of each item is superimposed on each frame. The graphics-processing unit 182 generates a superimposition state table indicating whether the sub-graphics information of each item is superimposed on each frame (Step S105).

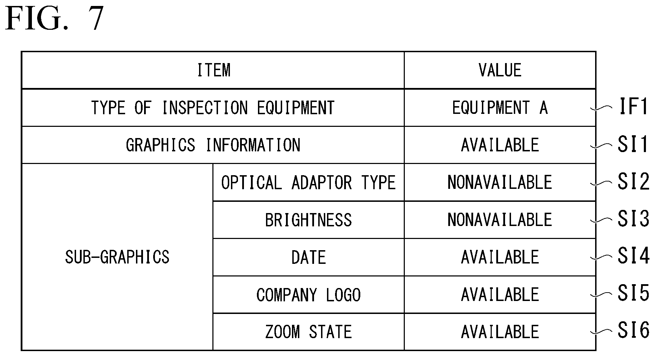

FIG 7 shows an example of the superimposition state table. The superimposition state table shown in FIG 7 includes type information IF1 and state information SI1 to SI6.

The type information IF1 indicates the type of inspection equipment. The state information SI1 to SI6 constitutes the setting information. The state information SI1 indicates whether the graphics information is superimposed in a video. The state information SI2 to SI6 indicates whether the sub-graphics information of each item is superimposed on each frame. When the state information SI1 indicates that the graphics information is superimposed in the video, at least one piece of the state information SI2 to SI6 indicates that the sub-graphics information of each item is superimposed on each frame.

The state information SI2 indicates whether the sub-graphics information indicating the optical adaptor type is superimposed on each frame. The state information SI3 indicates whether the sub-graphics information indicating the brightness of each frame is superimposed on each frame. The state information SI4 indicates whether the sub-graphics information indicating the date is superimposed on each frame. The state information SI5 indicates whether the sub-graphics information indicating the company logo is superimposed on each frame. The state information SI6 indicates whether the sub-graphics information indicating the zoom state of each frame is superimposed on each frame.

In the example shown in FIG 7, the state information SI1 indicates that the graphics information is superimposed in the video. The state information SI2 and SI3 indicates that the sub-graphics information of each item is not superimposed on each frame. The state information SI4 to SI6 indicates that the sub-graphics information of each item is superimposed on each frame.

After Step S105, the graphics-processing unit 182 identifies one or more graphics regions in which the sub-graphics information is superimposed (Step S106).

The graphics-processing unit 182 executes the following processing in Step S106. The graphics-processing unit 182 acquires a coordinate table indicating an image coordinate of a region in which the sub-graphics information of each item is superimposed. For example, the coordinate table is stored on the ROM 13.

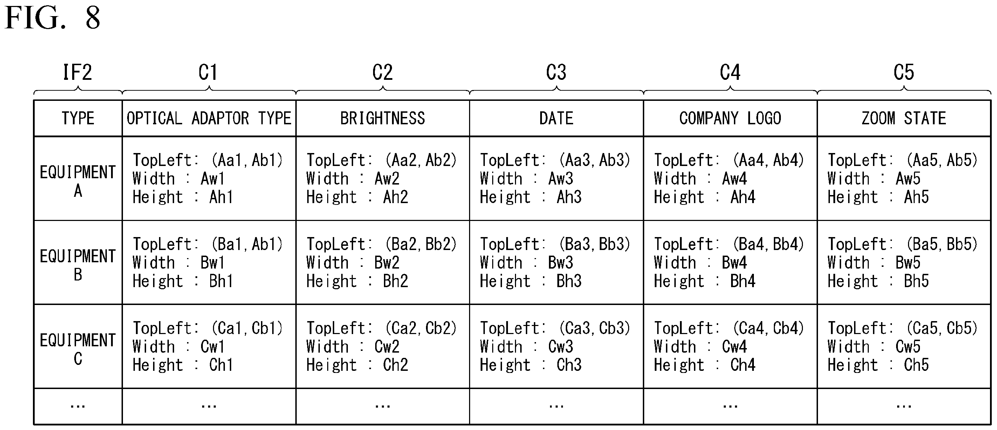

FIG 8 shows an example of the coordinate table. The coordinate table includes type information IF2 and coordinate information C1 to C5 associated with each other. The type information IF2 corresponds to the type information IF1 shown in FIG 7 and indicates the type of inspection equipment. The coordinate information C1 to C5 indicates an image coordinate of a region in which the sub-graphics information of each item is superimposed. The coordinate information C1 indicates an image coordinate of a region in which the sub-graphics information indicating the optical adaptor type is superimposed. The coordinate information C2 indicates an image coordinate of a region in which the sub-graphics information indicating the brightness of each frame is superimposed. The coordinate information C3 indicates an image coordinate of a region in which the sub-graphics information indicating the date is superimposed. The coordinate information C4 indicates an image coordinate of a region in which the sub-graphics information indicating the company logo is superimposed. The coordinate information C5 indicates an image coordinate of a region in which the sub-graphics information indicating the zoom state of each frame is superimposed. For example, the coordinate information C1 to C5 includes the image coordinate of the upper left point of the graphics region of each item, the horizontal width of the graphics region, and the vertical width of the graphics region.

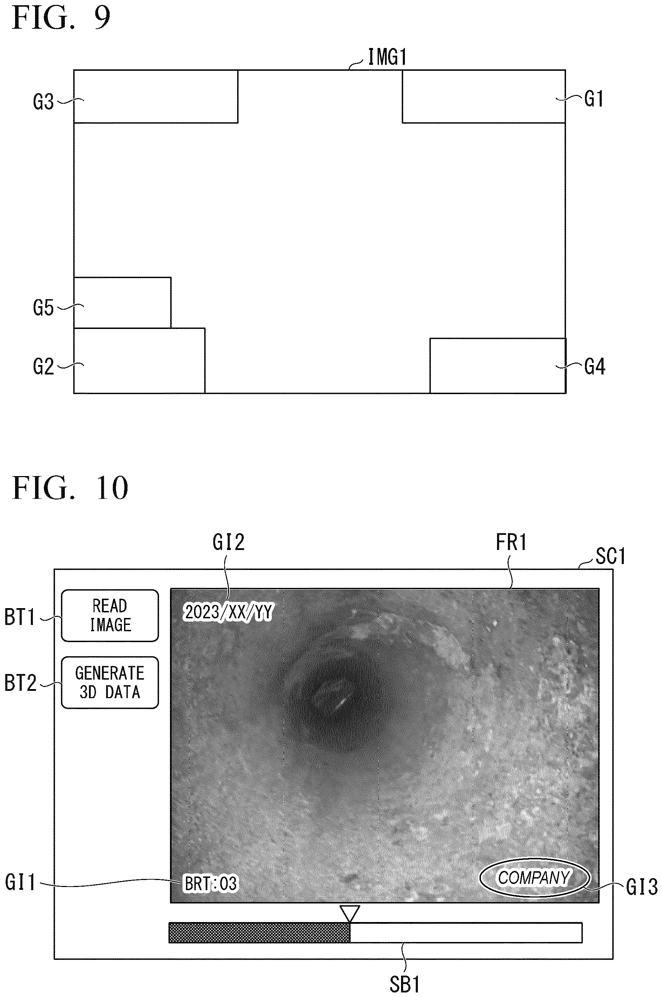

FIG 9 shows an example of the position of a graphics region in an image IMG1 generated by the imaging device 28. The image IMG1 includes graphics regions G1 to G5. Sub-graphics information indicating the optical adaptor type is superimposed in the graphics region G1. Sub-graphics information indicating the brightness of the image IMG1 is superimposed in the graphics region G2. Sub-graphics information indicating the date is superimposed in the graphics region G3. Sub-graphics information indicating the company logo is superimposed in the graphics region G4. Sub-graphics information indicating the zoom state of the image IMG1 is superimposed in the graphics region G5.

The graphics-processing unit 182 acquires the coordinate information corresponding to both the type information in the superimposition state table and the state information in the superimposition state table from the coordinate table. For example, the graphics-processing unit 182 searches the coordinate table for the same type information IF2 as the type information IF1 shown in FIG 7. The graphics-processing unit 182 acquires at least one piece of coordinate information C1 to C5 associated with the found type information IF2. Specifically, the graphics-processing unit 182 acquires the coordinate information corresponding to the state information indicating that the sub-graphics information is superimposed on each frame.

In the superimposition state table shown in FIG 7, the state information SI4 to SI6 indicates that the sub-graphics information of each item is superimposed on each frame. The graphics-processing unit 182 acquires the coordinate information C3 of the date indicated by the state information SI4, acquires the coordinate information C4 of the company logo indicated by the state information S15, and acquires the coordinate information C5 of the zoom state indicated by the state information SI6. The graphics-processing unit 182 identifies graphics regions indicated by the coordinate information C3 to C5. For example, the graphics-processing unit 182 identifies the graphics regions G3 to G5 shown in FIG 9.

After Step S106, the graphics-processing unit 182 sets the one or more graphics regions identified in Step S106 as an ineffective region (Step S107). The regions other than the ineffective region in an image generated by the imaging device 28 is an effective region used in the 3D reconstruction processing.

As described later, the 3D reconstruction processing includes processing of detecting a feature point from at least two images. The graphics-processing unit 182 changes an image in the ineffective region such that a feature point is not detected from the ineffective region. For example, the graphics-processing unit 182 changes the image in the ineffective region to a black image. At this time, the graphics-processing unit 182 changes the pixel values of the image in the ineffective region to values corresponding to a black level. The graphics-processing unit 182 may exclude the ineffective region from a region in which the processing of detecting a feature point is executed. The graphics-processing unit 182 may detect a feature point regardless of the effective region or the ineffective region and then may delete a feature point present in the ineffective region.

After Step S107, the 3D data generation unit 183 executes the 3D reconstruction processing by using two or more frames included in the video and generates 3D data (Step S108). The 3D data generation unit 183 reads necessary parameters for the 3D reconstruction processing from the RAM 14 and uses the parameters in the 3D reconstruction processing.

When the graphics-processing unit 182 has determined in Step S103 that no graphics information is superimposed in the video, the entire region of each of the two or more frames is set as an effective region. When the graphics-processing unit 182 has set a graphics region as an ineffective region in Step S107, the region other than the ineffective region in each of the two or more frames is set as an effective region. The 3D data generation unit 183 uses the effective region in the 3D reconstruction processing.

After Step S108, the display control unit 184 displays an image of the 3D data on the display unit 5 (Step S109). When Step S109 has been executed, the 3D data generation processing shown in FIG 6 is completed.

The graphics-processing unit 182 may execute the following processing instead of executing Step S101 and Step S102. The graphics-processing unit 182 acquires n frames in the video. For example, n is 10. The graphics-processing unit 182 divides a region of each frame into small lattice-like regions at intervals of p pixels. For example, p is 8.

The graphics-processing unit 182 compares pixel values of pixels having the same coordinates in n frames with each other. For example, the graphics-processing unit 182 compares the RGB value of a pixel having specific coordinates in a first frame with the RGB value of a pixel having the specific coordinates in a second frame following the first frame. The graphics-processing unit 182 compares the RGB value of the pixel having the specific coordinates in the second frame with the RGB value of a pixel having the specific coordinates in a third frame following the second frame. The graphics-processing unit 182 repeats this and detects a small region including pixels of which the RGB values do not change in n frames. The graphics-processing unit 182 determines that the detected small region is a graphics region.

FIG 10 shows an example of the screen of the display unit 5. The display unit 5 displays a screen SC1 shown in FIG 10. The screen SC1 includes a frame FR1, a button BT1, a button BT2, and a seek-bar SB1.

A user operates the button BT1 and the button BT2 by operating the operation unit 4. In a case in which the display unit 5 is constituted as a touch panel, the user operates the button BT1 and the button BT2 by touching the screen of the display unit 5.

A user presses the button BT1 in order to reproduce a video. After the button BT1 is pressed, a frame FR1 of the video is displayed. FIG 10 shows the screen SC1 displayed on the display unit 5 after the button BT1 is pressed.

The user may perform a predetermined operation on the screen SC1 by operating the operation unit 4 or touching the screen of the display unit 5. When the predetermined operation has been performed, an instruction to reproduce or pause the video may be input into the endoscope device 1. The screen SC1 may include a button used for inputting the instruction to reproduce or pause the video.

The seek-bar SB1 indicates the position of the frame FR1. The user can change the position of a frame in the seek-bar SB1 by operating the operation unit 4 or touching the screen of the display unit 5. In addition, the user can designate a frame for which the 3D reconstruction processing is started and a frame for which the 3D reconstruction processing is completed by operating the operation unit 4 or touching the screen of the display unit 5.

In the above-described example, the user designates a start frame for which the 3D reconstruction processing is started and a completion frame for which the 3D reconstruction processing is completed. The control unit 180 may automatically designate the start frame and the completion frame. For example, the control unit 180 may detect a section of the video in which a subject is moving. Alternatively, the control unit 180 may detect a section of the video in which an abnormality such as damage is seen. The section includes two or more frames of the video. The control unit 180 may designate the initial frame of the section as the start frame and may designate the last frame of the section as the completion frame.

Only one of the start frame and the completion frame may be designated by the user. Alternatively, only one of the start frame and the completion frame may be automatically designated. A method of setting a section including a frame to be used in the 3D reconstruction processing is not limited to the above-described examples.

The user presses the button BT2 in order to start the 3D reconstruction processing. After the button BT2 is pressed, the 3D data generation processing shown in FIG 6 is started.

Brightness GI1, a date GI2, and a company logo GI3 are superimposed on the frame FR1 as graphics information. The graphics region in which these are superimposed is set as an ineffective region.

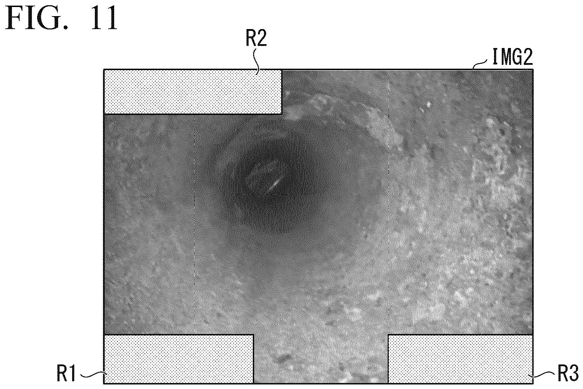

FIG 11 shows an example of a graphics region in an image generated by the imaging device 28. Graphics regions R1 to R3 are superimposed on an image IMG2. The image IMG2 corresponds to the frame FR1 shown in FIG 10. The graphics region R1 is a region in which the brightness GI1 shown in FIG 10 is superimposed. The graphics region R2 is a region in which the date GI2 shown in FIG 10 is superimposed. The graphics region R3 is a region in which the company logo GI3 shown in FIG 10 is superimposed.

The graphics regions R1 to R3 in all the frames included in the video are set as ineffective regions. The position of each graphics region is the same in all the frames. In addition, a region excluding the graphics regions R1 to R3 from the entire region in all the frames included in the video is set as an effective region.

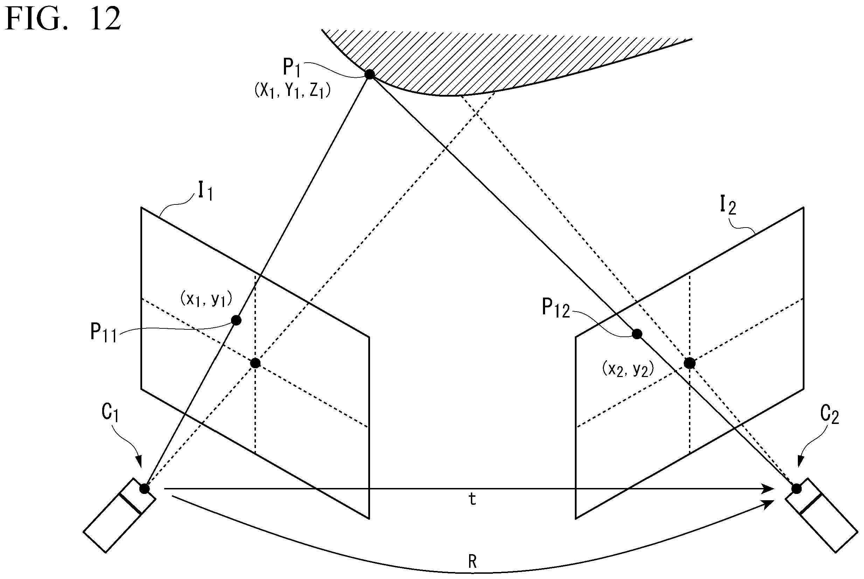

The 3D data generation unit 183 executes the following processing in Step S108. FIG 12 schematically shows a situation of image acquisition in a case in which two images are acquired.

As shown in FIG 12, first, an image $I_1$ is acquired in an imaging state $c_1$ of the camera. Next, an image $I_2$ is acquired in an imaging state $c_2$ of the camera. At least one of an imaging position and an imaging orientation is different between the imaging state $c_1$ and the imaging state $c_2$. In FIG 12, both the imaging position and the imaging orientation are different between the imaging state $c_1$ and the imaging state $c_2$.

In each embodiment of the present invention, it is assumed that the image $I_1$ and the image $I_2$ are acquired by the same endoscope. In addition, in each embodiment of the present invention, it is assumed that parameters of an objective optical system of the endoscope do not change. The parameters of the objective optical system are a focal distance, a distortion aberration, a pixel size of an image sensor, and the like. Hereinafter, for the convenience of description, the parameters of the objective optical system will be abbreviated as internal parameters. When such conditions are assumed, the internal parameters specifying characteristics of the optical system of the endoscope can be used in common regardless of the position and the orientation of the camera (observation optical system). In each embodiment of the present invention, it is assumed that the internal parameters are acquired at the time of factory shipment or at the time of delivery of a product. The internal parameters may be acquired before inspection is started in an inspection cite. In addition, in each embodiment of the present invention, it is assumed that the internal parameters are known at the time of acquiring an image.

In each embodiment of the present invention, it is assumed that the image $I_1$ and the image $I_2$ are acquired by one endoscope. However, the present invention is not limited to this. For example, the present invention may be also applied to a case in which 3D data are generated by using a plurality of videos acquired by a plurality of endoscopes. In this case, the image $I_1$ and the image $I_2$ have only to be acquired by using different endoscope devices, and each internal parameter has only to be stored for each endoscope. Even if the internal parameters are unknown when the 3D data are generated, it is possible to perform calculation by using the internal parameters as variables of a target of estimation. Therefore, the subsequent procedure does not greatly change in accordance with whether the internal parameters are known.

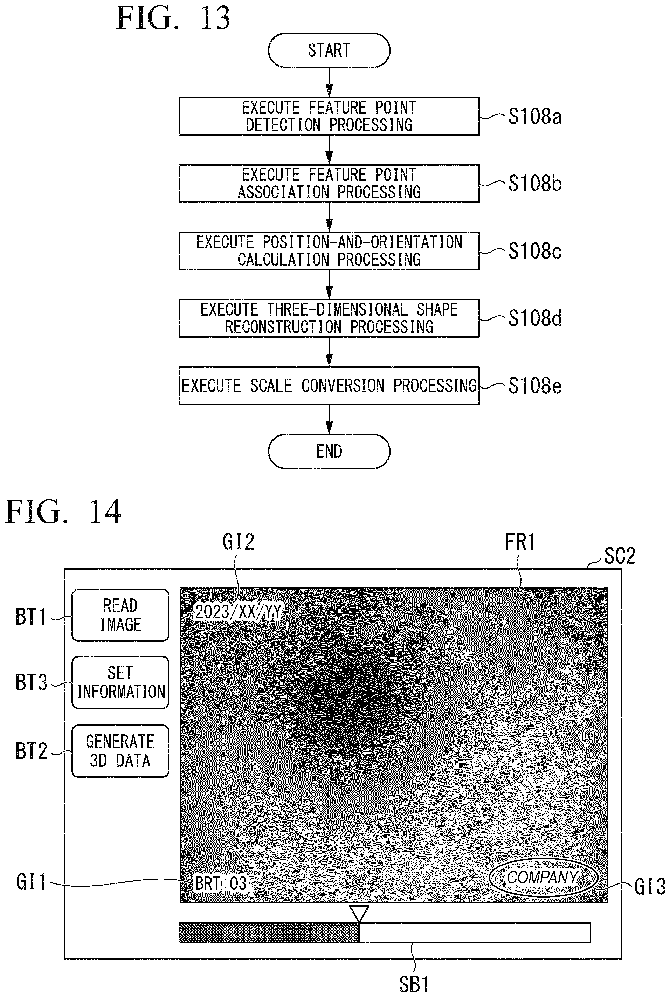

The details of the 3D reconstruction processing in Step S108 will be described by using FIG 13. FIG 13 shows a procedure of the 3D reconstruction processing.

First, the 3D data generation unit 183 executes feature point detection processing (Step S108a). The 3D data generation unit 183 detects a feature point of each of two images in the feature point detection processing. The feature point indicates a corner, an edge, and the like in which an image luminance gradient is large in information of a subject seen in an image. The feature point may be constituted by one pixel, which is a minimum unit of an image. Alternatively, the feature point may be constituted by two or more pixels. The 3D data generation unit 183 detects a feature point by using a descriptor of image features such as scale-invariant feature transform (SIFT) or features from accelerated segment test (FAST).

FIG 12 shows an example in which a feature point $P_{11}$ is detected from the image $I_1$ and a feature point $P_{12}$ is detected from the image $I_2$. The feature point $P_{11}$ and the feature point $P_{12}$ correspond to coordinates $P_1$ on a subject Although only one feature point of each image is shown in FIG 12, in fact, a plurality of feature points are detected in each image. There is a possibility that the number of feature points detected in each image is different between images. Each feature point detected from each image is converted into data called a feature quantity by using the descriptor. The feature quantity is data indicating characteristics of a feature point.

After Step S108a, the 3D data generation unit 183 executes feature point association processing (Step S108b). In the feature point association processing, the 3D data generation unit 183 compares correlations of feature quantities between images for each feature point detected through the feature point detection processing (Step S108a). In a case in which the correlations of the feature quantities are compared and a feature point of which feature quantities are close to those of a feature point of another image is found in each image, the 3D data generation unit 183 stores information of the feature point on the RAM 14. By doing this, the 3D data generation unit 183 associates feature points of respective images together. On the other hand, in a case in which a feature point of which feature quantities are close to those of a feature point of another image is not found, the 3D data generation unit 183 discards information of the feature point.

After Step S108b, the 3D data generation unit 183 reads coordinates of feature points (a pair of feature points) of two images associated with each other from the RAM 14. The coordinates are a pair of coordinates of feature points in each image. The 3D data generation unit 183 executes position-and-orientation calculation processing based on the read coordinates (Step S108c). In the position-and-orientation calculation processing, the 3D data generation unit 183 calculates a relative position and a relative orientation between the imaging state $c_1$ of the camera that acquires the image $I_1$ and the imaging state $c_2$ of the camera that acquires the image $I_2$. More specifically, the 3D data generation unit 183 calculates a matrix E by solving the following Equation (1) using an epipolar restriction.

$$p_1^T E p_2 = 0 \qquad E = [t]_X R \qquad \because [t]_X = \begin{pmatrix} 0 & -t_z & t_y \\ t_z & 0 & -t_x \\ -t_y & t_x & 0 \end{pmatrix} \qquad \cdots(1)$$

The matrix E is called a basic matrix. The basic matrix E is a matrix storing a relative position and a relative orientation between the imaging state $c_1$ of the camera that acquires the image $I_1$ and the imaging state $c_2$ of the camera that acquires the image $I_2$. In Equation (1), a matrix pi is a matrix including coordinates of a feature point detected from the image $I_1$. A matrix $p_2$ is a matrix including coordinates of a feature point detected from the image $I_2$. The basic matrix E includes information related to a relative position and a relative orientation of the camera and thus corresponds to external parameters of the camera. The 3D data generation unit 183 can solve the basic matrix E by using a known algorithm.

As shown in FIG 12, Expression (2) and Expression (3) are satisfied in a case in which the amount of position (relative position) change of the camera is t and the amount of orientation (relative orientation) change of the camera is R.

$$t = (t_x, t_y, t_z) \qquad \cdots(2)$$

$$R = R_x(\alpha) R_y(\beta) R_z(\gamma)$$

$$= \begin{pmatrix} 1 & 0 & 0 \\ 0 & \cos\alpha & -\sin\alpha \\ 0 & \sin\alpha & \cos\alpha \end{pmatrix} \begin{pmatrix} \cos\beta & 0 & \sin\beta \\ 0 & 1 & 0 \\ -\sin\beta & 0 & \cos\beta \end{pmatrix} \begin{pmatrix} \cos\gamma & -\sin\gamma & 0 \\ \sin\gamma & \cos\gamma & 0 \\ 0 & 0 & 1 \end{pmatrix}$$

$$\cdots(3)$$

In Expression (2), a moving amount in an x-axis direction is expressed as $t_x$, a moving amount in a y-axis direction is expressed as $t_y$, and a moving amount in a z-axis direction is expressed as $t_z$. In Expression (3), a rotation amount $\alpha$ around the x-axis is expressed as $R_x(\alpha)$, a rotation amount $\beta$ around the y axis is expressed as $R_y(\beta)$, and a rotation amount $\gamma$ around the z axis is expressed as $R_z(\gamma)$. After the basic matrix E is calculated, optimization processing called bundle adjustment may be executed in order to improve restoration accuracy of 3D coordinates.

The 3D data generation unit 183 calculates 3D coordinates (camera coordinate) in a coordinate system of 3D data by using the calculated amount of position change of the camera. For example, the 3D data generation unit 183 defines the 3D coordinates of the camera that acquires the image $I_1$. The 3D data generation unit 183 calculates the 3D coordinates of the camera that acquires the image $I_2$ based on both the 3D coordinates of the camera that acquires the image $I_1$ and the amount of position change of the camera that acquires the image $I_2$.

The 3D data generation unit 183 calculates orientation information in the coordinate system of the 3D data by using the calculated amount of orientation change of the camera. For example, the 3D data generation unit 183 defines orientation information of the camera that acquires the image $I_1$. The 3D data generation unit 183 generates orientation information of the camera that acquires the image $I_2$ based on both the orientation information of the camera that acquires the image $I_1$ and the amount of orientation change of the camera that acquires the image $I_2$.

The 3D data generation unit 183 generates 3D shape data by executing the position-and-orientation calculation processing (Step S108c). The 3D shape data include 3D coordinates (camera coordinate) at the position of the camera and include orientation information indicating the orientation of the camera. In addition, in a case in which a method such as structure from motion, visual-SLAM, or the like is applied to the position-and-orientation calculation processing (Step S 108c), the 3D data generation unit 183 further calculates 3D coordinates of each feature point in Step S 108c. The 3D shape data generated in Step S 108c do not include 3D coordinates of a point on the subject other than the feature point. Therefore, the 3D shape data indicate a sparse 3D shape of the subject.

The 3D shape data include the 3D coordinates of each feature point, the above-described camera coordinate, and the above-described orientation information. The 3D coordinates of each feature point are defined in the coordinate system of the 3D data. The 3D coordinates of each feature point are associated with two-dimensional coordinates (2D coordinates) of each feature point. The 2D coordinates of each feature point are defined in a coordinate system of an image including each feature point. The 2D coordinates and the 3D coordinates of each feature point are associated with an image including each feature point.

After Step S 108c, the 3D data generation unit 183 executes 3D shape reconstruction processing based on the relative position and the relative orientation of the camera (the amount t of position change and the amount R of orientation change) calculated in Step S 108c (Step S 108d). The 3D data generation unit 183 generates 3D data of the subject in the 3D shape reconstruction processing. As a technique for restoring a 3D shape of the subject, there are patch-based multi-view stereo (PMVS), matching-processing that uses parallelization stereo, and the like. However, a means therefor is not particularly limited.

The 3D data generation unit 183 calculates 3D coordinates of points on the subject other than feature points in Step S108d. The 3D coordinates of each point other than the feature points are defined in the coordinate system of the 3D data. The 3D coordinates of each point are associated with the 2D coordinates of each point. The 2D coordinates of each point are defined in a coordinate system of a 2D image including each point. The 2D coordinates and the 3D coordinates of each point are associated with a 2D image including each point. The 3D data generation unit 183 updates the 3D shape data. The updated 3D shape data include the 3D coordinates of each feature point, the 3D coordinates of each point other than the feature points, the camera coordinate, and the orientation information. The 3D shape data updated in Step S108d include the 3D coordinates of a point on the subject other than the feature points in addition to the 3D coordinates of the feature points. Therefore, the 3D shape data indicate a dense 3D shape of the subject.

After Step S108d, the 3D data generation unit 183 executes scale conversion processing based on both the 3D shape data processed in the 3D shape reconstruction processing (Step S108d) and the scale information read from the RAM 14 (Step S108e). The 3D data generation unit 183 transforms the 3D shape data of the subject into 3D coordinate data (3D data) having a dimension of length in the scale conversion processing. When Step S108e is executed, the 3D reconstruction processing shown in FIG 13 is completed.

In order to shorten a processing time, Step S108d may be omitted. In this case, after Step S108c is executed, Step S108e is executed without Step S108d being executed.

Step S108e may be omitted. In this case, after Step S108d is executed, the 3D reconstruction processing shown in FIG 13 is completed without Step S108e being executed. In this case, the 3D data indicate a relative shape of the subject not having a dimension of length.

It is necessary that at least part of a region of one of the images and at least part of a region of at least one of the other images overlap each other in order to generate 3D data in accordance with the principle shown in FIG 12. In other words, a region of a first image and a region of a second image different from the first image include a common region. The other region in the first image excluding the common region and the other region in the second image excluding the common region are different from each other. Two or more images used for generating the 3D data include at least two images in which the same region of the subject is seen.

The image $I_1$ and the image $I_2$ are not necessarily two temporally consecutive frames in a video. There may be one or more frames between the image $I_1$ and the image $I_2$ in the video.

As described above, the graphics-processing unit 182 sets one or more graphics regions as ineffective regions in Step S107 shown in FIG 6. Specifically, the graphics-processing unit 182 changes an image in an ineffective region such that a feature point is not detected from a graphics region. For example, the graphics-processing unit 182 changes the image in the ineffective region to a black image. Alternatively, the graphics-processing unit 182 excludes the ineffective region from a region in which the processing of detecting a feature point is executed. Alternatively, the graphics-processing unit 182 detects a feature point regardless of the effective region or the ineffective region and then deletes a feature point present in the ineffective region.

In the feature point detection processing (Step S108a) shown in FIG 13, no feature points in the black image are detected. Alternatively, the feature point detection processing (Step S108a) is not executed in the ineffective region. Alternatively, in the feature point detection processing (Step S108a), a feature point present in the ineffective region is deleted after a feature point is detected regardless of the effective region or the ineffective region. In other words, no feature points in the ineffective region are detected. Therefore, the ineffective region is not used in the feature point association processing (Step S108b), the position-and-orientation calculation processing (Step S108c), and the 3D shape reconstruction processing (Step S 108d) shown in FIG 13. In other words, the ineffective region does not contribute to generation of 3D data. The 3D data generation unit 183 generates 3D data of a subject without using the ineffective region.

The 3D data generation unit 183 generates the 3D data of the subject by using only the effective region other than the ineffective region in an image on which graphics information is superimposed. Therefore, the endoscope device 1 can generate the 3D data with high accuracy.

When the graphics-processing unit 182 has determined in Step S 103 shown in FIG 6 that the graphics information is superimposed in the video, the graphics-processing unit 182 may cancel execution of the 3D reconstruction processing. In this case, the graphics-processing unit 182 does not execute the 3D reconstruction processing. Therefore, the endoscope device 1 can avoid failure of the 3D reconstruction processing or can avoid deterioration of accuracy of 3D data.

The video-signal-processing circuit 12 may output a first image and a second image to the CPU 18. No graphics information is superimposed on the first image. The second image is generated by superimposing graphics information on the first image. The CPU 18 may acquire the first image and the second image from the video-signal-processing circuit 12. The CPU 18 may record two or more first images and two or more second images on a storage medium. For example, the storage medium is a storage medium included in the PC 41 or the memory card 42.

The CPU 18 may execute the 3D data generation processing shown in FIG 6 by using the two or more second images. When the graphics-processing unit 182 has determined in Step S 103 that the graphics information is superimposed on the two or more second images, the graphics-processing unit 182 may execute the 3D data generation processing by using the two or more first images. The endoscope device 1 can avoid failure of the 3D reconstruction processing or can avoid deterioration of accuracy of 3D data by using the two or more first images in the 3D data generation processing.

At least one image of two or more images used in the 3D reconstruction processing may include graphics information. When the graphics-processing unit 182 has determined that no graphics information is superimposed on any of the two or more images, the graphics-processing unit 182 may execute the 3D data generation processing by using the two or more images. When the graphics-processing unit 182 has determined that graphics information is superimposed on at least one image of the two or more images, the graphics-processing unit 182 may set a graphics region in the at least one image as an ineffective region.

The endoscope device 1 (3D data generation system) according to each aspect of the present invention includes an imaging apparatus, the video-signal-processing circuit 12 (image-processing device), and the CPU 18. The endoscope device 1 generates 3D data indicating a 3D shape inside an object. The imaging apparatus includes the tubular insertion unit 2 that acquires an optical image inside the object. The imaging apparatus generates two or more images of the object in a state in which the insertion unit 2 is inserted inside the object. The video-signal-processing circuit 12 superimposes graphics information on at least one image of the two or more images.

The CPU 18 acquires the two or more images and determines whether the two or more images include a graphics region in which the graphics information is superimposed. The CPU 18 executes first processing when it is determined that the two or more images do not include the graphics region. The first processing includes the 3D reconstruction processing (generation processing) of generating the 3D data by using the two or more images. The CPU 18 executes second processing when it is determined that at least one image of the two or more images includes the graphics region. The second processing includes processing of preventing the graphics region in the at least one image from contributing to generation of the 3D data.

A 3D data generation method according to each aspect of the present invention generates 3D data indicating a 3D shape inside an object. The 3D data generation method includes an image acquisition step, a determination step, a first processing step, and a second processing step.

The CPU 18 acquires two or more images of an object in the image acquisition step (Step S100). The CPU 18 determines in the determination step (Step S103) whether the two or more images include a graphics region in which the graphics information is superimposed by the video-signal-processing circuit 12. The CPU 18 executes first processing in the first processing step (Step S108) when it is determined that the two or more images do not include the graphics region. The first processing includes the 3D reconstruction processing of generating the 3D data by using the two or more images. The CPU 18 executes second processing in the second processing step (Step S107) when it is determined that at least one image of the two or more images includes the graphics region. The second processing includes processing of preventing the graphics region in the at least one image from contributing to generation of the 3D data.

Each aspect of the present invention may include the following modified example. The second processing includes processing of setting the graphics region in the at least one image determined to include the graphics region as an ineffective region.

Each aspect of the present invention may include the following modified example. The second processing includes the 3D reconstruction processing in which a region other than the ineffective region in the two or more images is used.

Each aspect of the present invention may include the following modified example. The second processing includes processing of setting the graphics region as the ineffective region based on setting information and coordinate information (position information). The setting information indicates an item corresponding to the graphics information superimposed on the at least one image determined to include the graphics region. The coordinate information indicates the position of the graphics region in which the graphics information corresponding to the item is superimposed.

Each aspect of the present invention may include the following modified example. The second processing includes processing of setting the graphics region as the ineffective region based on type information, setting information, and coordinate information (display position information). The type information indicates the type of imaging apparatus. The setting information is prepared for each type of imaging apparatus and indicates an item corresponding to the graphics information superimposed on the at least one image determined to include the graphics region. The coordinate information indicates the position of the graphics region in which the graphics information corresponding to the item is superimposed.

Each aspect of the present invention may include the following modified example. The 3D reconstruction processing includes feature point detection processing of detecting a feature point from the two or more images. The second processing includes both processing of changing an image in the ineffective region such that a feature point is not detected from the ineffective region and processing of the 3D reconstruction processing in which the two or more images are used.

Each aspect of the present invention may include the following modified example. The 3D reconstruction processing includes feature point detection processing of detecting a feature point from the two or more images. The second processing includes processing of excluding the ineffective region from a region in which the feature point detection processing is executed.

Each aspect of the present invention may include the following modified example. The 3D reconstruction processing includes feature point detection processing of detecting a feature point from the two or more images. The second processing includes processing of deleting a feature point detected from the ineffective region.

Each aspect of the present invention may include the following modified example. The second processing includes processing of canceling execution of the 3D reconstruction processing.

Each aspect of the present invention may include the following modified example. A storage medium stores two or more images, generated by the imaging apparatus, on which graphics information is not superimposed by the video-signal-processing circuit 12. The second processing includes the 3D reconstruction processing in which the two or more images stored on the storage medium are used.

Each aspect of the present invention may include the following modified example. The CPU 18 determines whether the two or more images include the graphics region based on setting information indicating whether graphics information is superimposed on each of the two or more images.

Each aspect of the present invention may include the following modified example. The CPU 18 performs, on the two or more images, image processing of detecting a graphics region. The CPU 18 determines whether the two or more images include the graphics region based on a result of the image processing.

Each aspect of the present invention may include the following modified example. The graphics information includes at least one of the type of optical adaptor attached to the distal end 20 of the insertion unit 2, the brightness of an image generated by the imaging apparatus, the date, a mark, and the magnification of the image generated by the imaging apparatus. In addition, items of the graphics information may be different in accordance with the type of imaging apparatus.

Each aspect of the present invention may include the following modified example. The CPU 18 acquires the two or more images from a storage medium after the two or more images are stored on the storage medium. In other words, the CPU 18 executes the 3D data generation processing by using the two or more images stored on the storage medium instead of executing the 3D data generation processing at the same time as the imaging apparatus generates the two or more images.

Each aspect of the present invention may include the following modified example. The insertion unit 2 includes the lens 21 and the imaging device 28 (image sensor).

Each aspect of the present invention may include the following modified example. The lens 21 and the imaging device 28 are built in the distal end 20 of the insertion unit 2. The positions of the distal end 20 when the two or more images are generated are different from each other. The orientations of the distal end 20 when the two or more images are generated are different from each other. For example, the two or more images include a first image and a second image. The position of the distal end 20 when the second image is generated is different from that of the distal end 20 when the first image is generated. The orientation of the distal end 20 when the second image is generated is different from that of the distal end 20 when the first image is generated.

Each aspect of the present invention may include the following modified example. The imaging apparatus, the video-signal-processing circuit 12, and the CPU 18 are included in the endoscope device 1.

Each aspect of the present invention may include the following modified example. The imaging apparatus generates the two or more images based on an optical image formed through a monocular optical adaptor attached to the distal end 20 of the insertion unit 2.

Each aspect of the present invention may include the following modified example. The same region of a component of an object is seen in at least two images included in the two or more images.

In the first embodiment, in a case in which at least one image of the two or more images includes a graphics region, the CPU 18 sets the graphics region as an ineffective region. Therefore, the endoscope device 1 can avoid failure of processing of generating 3D data or can avoid deterioration of accuracy of the 3D data.

Furthermore, the endoscope device 1 can generate the 3D data with graphics information, which is useful for reporting inspection results or managing data, remaining in images. Therefore, the endoscope device 1 can avoid deterioration of inspection efficiency for generating the 3D data.

In a case in which at least one image of the two or more images includes a graphics region, the CPU 18 generates the 3D data by using a region other than the graphics region in each of the two or more images. Therefore, the endoscope device 1 can generate the 3D data with high accuracy.

(Second embodiment)

A second embodiment of the present invention will be described. In the first embodiment described above, the graphics-processing unit 182 acquires, from the header of a video file, type information indicating the type of inspection equipment and setting information indicating whether graphics information is superimposed in the video. On the other hand, in the second embodiment, a user inputs the type information and the setting information into the endoscope device 1, and the graphics-processing unit 182 receives the type information and the setting information. In the second embodiment, meta-data stored in the header or the footer of the video file need not include the type information or the setting information.

In the second embodiment, the 3D data generation processing shown in FIG 6 is change as described below. A user understands the type of endoscope device 1 serving as inspection equipment in advance. After the video is displayed on the display unit 5, the user inputs the type information into the endoscope device 1 by operating the operation unit 4 or the touch panel. The graphics-processing unit 182 receives the type information input through the operation unit 4 or the touch panel in Step S101.

The user checks a frame of the video displayed on the display unit 5 and determines whether graphics information is superimposed on the frame. The user inputs the setting information into the endoscope device 1 by operating the operation unit 4 or the touch panel. The graphics-processing unit 182 receives the setting information input through the operation unit 4 or the touch panel in Step S102.

FIG 14 shows an example of the screen of the display unit 5. The display unit 5 displays a screen SC2 shown in FIG 14. The screen SC2 includes a frame FR1, a button BT1, a button BT2, a button BT3, and a seek-bar SB1. The same parts as those of FIG 10 will not be described.

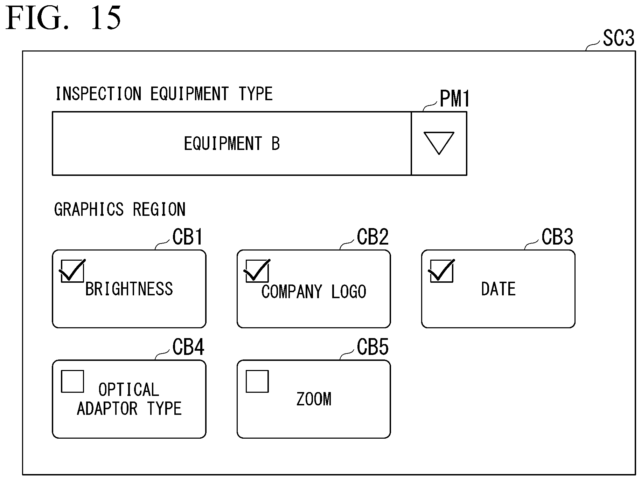

A user presses the button BT3 in order to input type information and setting information into the endoscope device 1. After the button BT3 is pressed, the display unit 5 displays a screen SC3 shown in FIG 15. When the image acquisition unit 181 has acquired the video from the RAM 14, the display unit 5 may display the screen SC3 without displaying the screen SC2. The screen SC3 includes a pull-down menu PM1 and check boxes CB1 to CB5. The user operates the pull-down menu PM1 and the check boxes CB1 to CB5 by operating the operation unit 4 or touching the screen of the display unit 5.

The user operates the pull-down menu PM1 and selects the type of inspection equipment corresponding to the endoscope device 1 in use. The graphics-processing unit 182 receives the type information indicating the type selected by the user.

The user operates the check boxes CB1 to CB5 and selects an item of sub-graphics information superimposed on each frame. The check box CB1 indicates the setting of sub-graphics information indicating the brightness of each frame. The check box CB2 indicates the setting of sub-graphics information indicating a company logo. The check box CB3 indicates the setting of sub-graphics information indicating a date. The check box CB4 indicates the setting of sub-graphics information indicating the optical adaptor type. The check box CB5 indicates the setting of sub-graphics information indicating the zoom state of each frame.

Brightness GI1, a date GI2, and a company logo GI3 are superimposed on the frame FR1 shown in FIG 14. Therefore, the user operates the check boxes CB1 to CB3. The graphics-processing unit 182 receives setting information indicating that the sub-graphics information of the item corresponding to each of the check boxes CB1 to CB3 is superimposed on each frame.

The graphics-processing unit 182 refers to the setting information and determines whether the graphics information is superimposed in the video in Step S103. When the setting information indicates that the sub-graphics information of the item corresponding to at least one of the check boxes CB1 to CB5 is superimposed on each frame, the graphics-processing unit 182 determines that the graphics information is superimposed in the video. When the setting information indicates that no sub-graphics information of the item corresponding to any of the check boxes CB1 to CB5 is superimposed on each frame, the graphics-processing unit 182 determines that no graphics information is superimposed in the video.

When the graphics-processing unit 182 has determined in Step S 103 that the graphics information is superimposed in the video, the graphics-processing unit 182 refers to the setting information and determines whether the sub-graphics information of each item is superimposed on each frame in Step S105. The graphics-processing unit 182 generates a superimposition state table indicating whether the sub-graphics information of each item is superimposed on each frame in Step S 105.

Each aspect of the present invention may include the following modified example. The CPU 18 receives type information and setting information input through an input device. For example, the input device is the operation unit 4 or the touch panel.

In the second embodiment, even when the type information and setting information are not associated with the video in advance, the CPU 18 sets a graphics region as an ineffective region based on the type information and setting information input by a user via the input device. Therefore, the endoscope device 1 can avoid failure of processing of generating 3D data or can avoid deterioration of accuracy of the 3D data.

(Third embodiment)

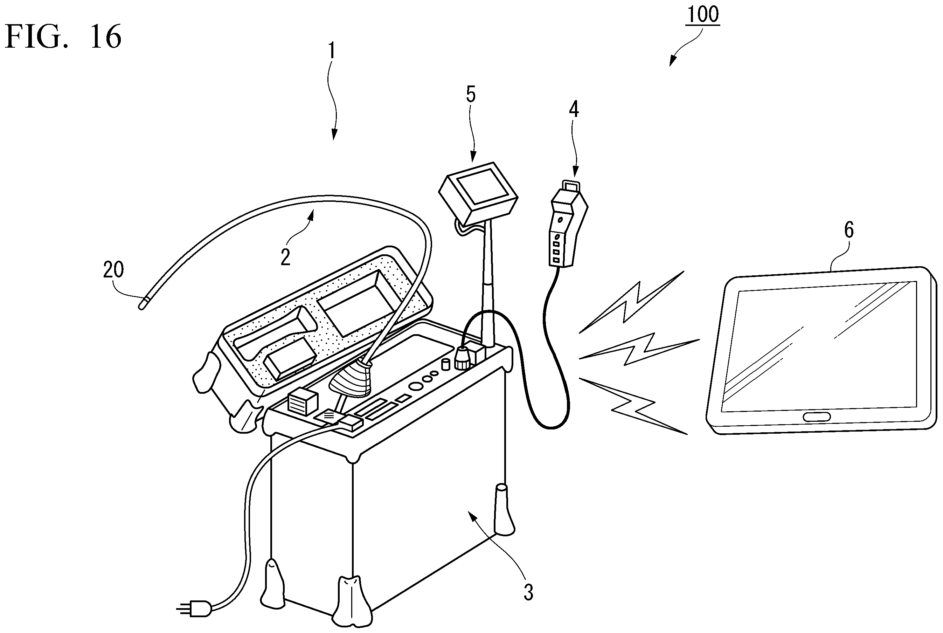

A third embodiment of the present invention will be described. In the third embodiment, a device that acquires an image of a subject and a device that generates 3D data are different. FIG 16 shows a configuration of an endoscope system 100 (3D data generation system) according to the third embodiment. The endoscope system 100 shown in FIG 16 includes an endoscope device 1 and an external device 6. The endoscope device 1 acquires two or more images of the subject and transmits the two or more images to the external device 6. The external device 6 receives the two or more images from the endoscope device 1 and executes the 3D reconstruction processing by using the two or more images.

The configuration of the endoscope device 1 is similar to that shown in FIG 2. The external device interface 16 performs communication with the external device 6. Specifically, the external device interface 16 transmits the two or more images of the subject to the external device 6.

For example, the external device interface 16 is a wireless module and performs wireless communication with the external device 6. The endoscope device 1 and the external device 6 may be connected to each other via a cable such as a local area network (LAN) cable, and the external device interface 16 may perform communication with the external device 6 via the cable.

For example, the external device 6 is a mobile terminal such as a tablet terminal. The external device 6 may be a fixed terminal. The form of the external device 6 is not limited thereto.

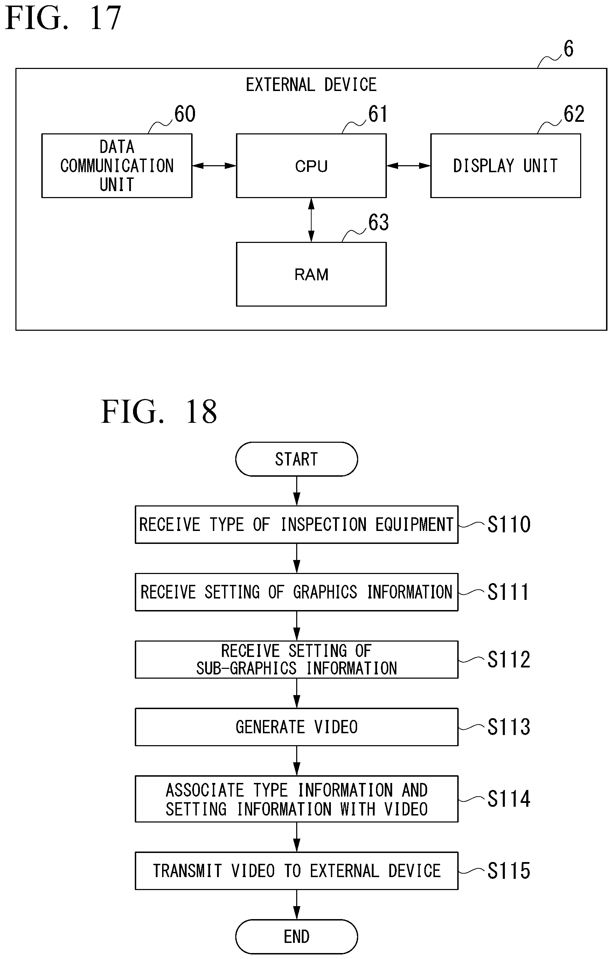

FIG 17 shows a functional configuration of the external device 6. The external device 6 shown in FIG 17 includes a data communication unit 60, a CPU 61, a display unit 62, and a RAM 63.

The data communication unit 60 receives two or more images from the endoscope device 1. For example, the data communication unit 60 is a wireless module and performs wireless communication with the endoscope device 1. The data communication unit 60 may perform communication with the endoscope device 1 via a cable.

CPU 61 is configured similarly to the CPU 18 shown in FIG 5. In addition, the CPU 61 controls communication executed by the data communication unit 60 with the endoscope device 1. In other words, the CPU 61 causes the data communication unit 60 to receive the two or more images from the endoscope device 1.

The CPU 61 may read a program including commands defining the operations of the CPU 61 and may execute the read program. In other words, the functions of the CPU 61 may be realized by software. A method of implementing this program is similar to that of implementing a program realizing the functions of the endoscope device 1.

The display unit 62 includes a display screen and displays an image, an operation menu and the like on the display screen. The display unit 62 is a monitor (display) such as an LCD.

The RAM 63 temporarily stores information used for causing the CPU 61 to control the external device 6.

Processing executed by the endoscope device 1 will be described by using FIG 18. FIG 18 shows a procedure of the processing executed by the endoscope device 1.

A user understands the type of endoscope device 1 serving as inspection equipment in advance. The user inputs the type information into the endoscope device 1 by operating the operation unit 4 or the touch panel. The CPU 18 receives the type information input through the operation unit 4 or the touch panel 1 (Step S110).

The user inputs information indicating whether graphics information is superimposed in a video into the endoscope device 1 by operating the operation unit 4 or the touch panel. After Step S110, the CPU 18 receives the information input through the operation unit 4 or the touch panel (Step S111).

The user inputs information indicating whether sub-graphics information of each item is superimposed on each frame into the endoscope device 1 by operating the operation unit 4 or the touch panel. After Step S111, the CPU 18 receives the information input through the operation unit 4 or the touch panel (Step S112).

After Step S112, the imaging device 28 starts imaging and generates a video (Step S113). When the imaging device 28 has completed the imaging, a video file including the video is recorded on the PC 41 or the memory card 42.

After Step S113, the CPU 18 generates type information including the information received in Step S110. In addition, the CPU 18 generates setting information including the information received in Step S111 and the information received in Step S112. The CPU 18 records the type information and the setting information in the header of the video file (Step S114). Due to this, the type information and the setting information are associated with the video.

After Step S114, the CPU 18 reads the video file from the PC 41 via the external device interface 16. Alternatively, the CPU 18 reads the video file from the memory card 42 via the card interface 15. The CPU 18 transmits the video file to the external device 6 via the external device interface 16 (Step S115). When Step S115 has been executed, the processing shown in FIG 18 is completed.

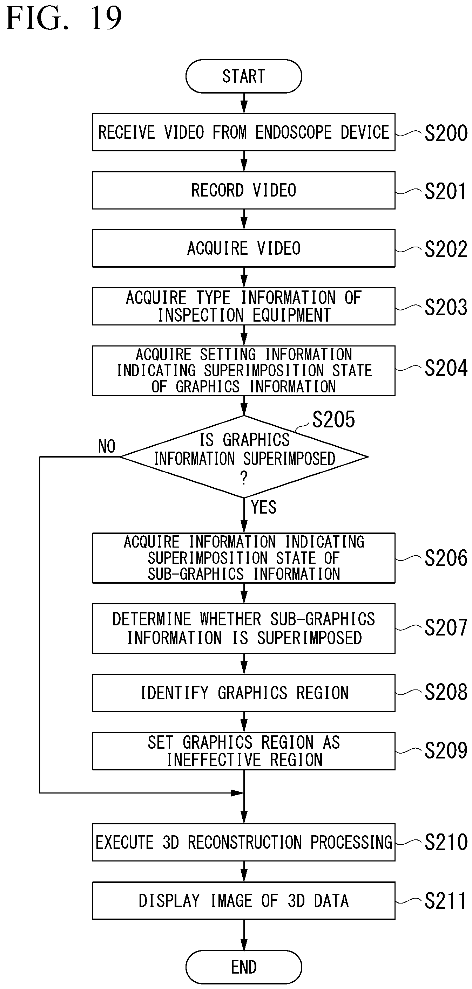

Processing executed by the external device 6 will be described by using FIG 19. FIG 19 shows a procedure of the processing executed by the external device 6.

The CPU 61 causes the data communication unit 60 to receive the video file from the endoscope device 1. By doing this, the data communication unit 60 receives the video file from the endoscope device 1 (Step S200).

After Step S200, the CPU 61 stores the video file received from the endoscope device 1 on the RAM 63 (Step S201).

After Step S201, Step S202 is executed. As shown in FIG 19, Steps S202 to S211 are executed. Steps S202 to S211 are similar to respective Steps S100 to S109 in FIG 6. When Step S211 has been executed, the processing shown in FIG 19 is completed.

The endoscope device 1 may transmit the video to the external device 6 at the same time as the imaging device 28 generates the video. The CPU 61 may execute the 3D reconstruction processing in real time at the same time of receiving the video from the endoscope device 1.

Various modifications that can be applied to the endoscope device 1 in the first embodiment and the second embodiment can also be applied to the endoscope system 100 in the third embodiment alike.

Each aspect of the present invention may include the following modified example. The imaging apparatus and the video-signal-processing circuit 12 (image-processing device) are included in the endoscope device 1. The CPU 61 is included in the external device 6 that is separate from the endoscope device 1.

In the third embodiment, the endoscope system 100 can avoid failure of processing of generating 3D data or can avoid deterioration of accuracy of the 3D data.

While preferred embodiments of the invention have been described and shown above, it should be understood that these are examples of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

[Reference Signs List]

1 Endoscope device
2 Insertion unit
3 Main body unit
4 Operation unit
5, 62 Display unit
6 External device
8 Endoscope unit

9 CCU
10 Control device
12 Video-signal-processing circuit
13 ROM
14, 63 RAM
15 Card interface
16 External device interface
17 Control interface
18, 61 CPU
20 Distal end
21 Lens
28 Imaging device
60 Data communication unit
100 Endoscope system
180 Control unit
181 Image acquisition unit
182 Graphics-processing unit
183 3D data generation unit
184 Display control unit
185 Operation-processing unit

**Claims**

1.  A three-dimensional data generation system (1) configured to generate three-dimensional data indicating a three-dimensional shape inside an object, the three-dimensional data generation system comprising:

    an imaging apparatus (2, 20) that includes a tubular insertion unit (2) configured to acquire an optical image inside the object and is configured to generate two or more images of the object in a state in which the insertion unit is inserted inside the object;
    an image-processing device (12) configured to superimpose graphics information on at least one image of the two or more images; and
    a processor (18) configured to:

    acquire the two or more images;
    determine whether the two or more images include a graphics region in which the graphics information is superimposed;
    execute first processing when it is determined that the two or more images do not include the graphics region, wherein the first processing includes generation processing of generating the three-dimensional data by using the two or more images; and
    execute second processing when it is determined that at least one image of the two or more images includes the graphics region,
    wherein the second processing includes processing of preventing the graphics region in the at least one image from contributing to generation of the three-dimensional data.

2.  The three-dimensional data generation system according to Claim 1,
    wherein the second processing includes processing of setting the graphics region in the at least one image as an ineffective region.

3.  The three-dimensional data generation system according to Claim 2,
    wherein the second processing includes the generation processing in which a region other than the ineffective region in the two or more images is used.

4.  The three-dimensional data generation system according to Claim 2,

    wherein the second processing includes processing of setting the graphics region as the ineffective region based on setting information and position information,
    wherein the setting information indicates an item corresponding to the graphics information superimposed on the at least one image, and
wherein the position information indicates a position of the graphics region in which the graphics information corresponding to the item is superimposed.

5. The three-dimensional data generation system according to Claim 2,

   wherein the second processing includes processing of setting the graphics region as the ineffective region based on type information, setting information, and position information,
   wherein the type information indicates type of imaging apparatus,
   wherein the setting information is prepared for each type of imaging apparatus and indicates an item corresponding to the graphics information superimposed on the at least one image, and
   wherein the position information indicates a position of the graphics region in which the graphics information corresponding to the item is superimposed.

6. The three-dimensional data generation system according to Claim 5,
   wherein the processor is configured to receive the type information and the setting information input through an input device.

7. The three-dimensional data generation system according to Claim 2,

   wherein the generation processing includes detection processing of detecting a feature point from the two or more images, and
   wherein the second processing includes:

      processing of changing an image in the ineffective region such that a feature point is not detected from the ineffective region; and
      the generation processing in which the two or more images are used.

8. The three-dimensional data generation system according to Claim 3,

   wherein the generation processing includes detection processing of detecting a feature point from the two or more images, and
   wherein the second processing includes processing of excluding the ineffective region from a region in which the detection processing is executed.

9. The three-dimensional data generation system according to Claim 3,

   wherein the generation processing includes detection processing of detecting a feature point from the two or more images, and
   wherein the second processing includes processing of deleting a feature point detected from the ineffective region.

10. The three-dimensional data generation system according to Claim 1,
    wherein the second processing includes processing of canceling execution of the generation processing.

11. The three-dimensional data generation system according to Claim 1,

    wherein a storage medium stores two or more images, generated by the imaging apparatus, on which the graphics information is not superimposed by the image-processing device, and
    wherein the second processing includes the generation processing in which the two or more images stored on the storage medium are used.

12. The three-dimensional data generation system according to Claim 1,
    wherein the processor is configured to determine whether the two or more images include the graphics region based on setting information indicating whether the graphics information is superimposed on each of the two or more images.

13. The three-dimensional data generation system according to Claim 1,
    wherein the processor is configured to:

perform, on the two or more images, image processing of detecting the graphics region; and
determine whether the two or more images include the graphics region based on a result of the image processing.

14. The three-dimensional data generation system according to Claim 1,
wherein the graphics information includes at least one of type of optical adaptor attached to a distal end of the insertion unit, brightness of an image generated by the imaging apparatus, a date, a mark, and a magnification of an image generated by the imaging apparatus.

15. The three-dimensional data generation system according to Claim 1,
wherein the processor is configured to acquire the two or more images from a storage medium after the two or more images are stored on the storage medium.

16. The three-dimensional data generation system according to Claim 1,
wherein the insertion unit includes a lens and an image sensor.

17. The three-dimensional data generation system according to Claim 16,

wherein the lens and the image sensor are built in a distal end of the insertion unit,
wherein positions of the distal end when the two or more images are generated are different from each other, and
wherein orientations of the distal end when the two or more images are generated are different from each other.

18. The three-dimensional data generation system according to Claim 1,
wherein the imaging apparatus, the image-processing device, and the processor are included in an endoscope device.

19. The three-dimensional data generation system according to Claim 1,

wherein the imaging apparatus and the image-processing device are included in an endoscope device, and
wherein the processor is included in an external device that is separate from the endoscope device.

20. The three-dimensional data generation system according to Claim 1,
wherein the imaging apparatus is configured to generate the two or more images based on an optical image formed through a monocular optical adaptor attached to a distal end of the insertion unit.

21. The three-dimensional data generation system according to Claim 1,
wherein the same region of a component of the object is seen in at least two images included in the two or more images.

22. A three-dimensional data generation method of generating three-dimensional data indicating a three-dimensional shape inside an object, the three-dimensional data generation method comprising:

acquiring (S100) two or more images of the object by using a processor,
wherein the two or more images are generated by an imaging apparatus that includes a tubular insertion unit configured to acquire an optical image inside the object and is configured to generate the two or more images in a state in which the insertion unit is inserted inside the object;
determining (S 103) by using the processor whether the two or more images include a graphics region in which graphics information is superimposed by an image-processing device;
executing (S 108) first processing by using the processor when it is determined that the two or more images do not include the graphics region,
wherein the first processing includes generation processing of generating the three-dimensional data by using the two or more images; and
executing (S 107) second processing by using the processor when it is determined that at least one image of the two or more images includes the graphics region,
wherein the second processing includes processing of preventing the graphics region in the at least one image from contributing to generation of the three-dimensional data.

23. A program causing a computer to execute processing of generating three-dimensional data indicating a three-dimensional shape inside an object, the processing comprising:

acquiring (S100) two or more images of the object,

wherein the two or more images are generated by an imaging apparatus that includes a tubular insertion unit configured to acquire an optical image inside the object and is configured to generate the two or more images in a state in which the insertion unit is inserted inside the object;

determining (S 103) whether the two or more images include a graphics region in which graphics information is superimposed by an image-processing device;

executing (S 108) first processing when it is determined that the two or more images do not include the graphics region,

wherein the first processing includes generation processing of generating the three-dimensional data by using the two or more images; and

executing (S 107) second processing when it is determined that at least one image of the two or more images includes the graphics region,

wherein the second processing includes processing of preventing the graphics region in the at least one image from contributing to generation of the three-dimensional data.

FIG. 1

# FIG. 2

EP 4 528 641 A1

FIG. 3

EP 4 528 641 A1

# FIG. 4

DR12

RT10

DS10

RA10

# FIG. 5

18

CPU

181
IMAGE
ACQUISITION UNIT

180
CONTROL UNIT

182
GRAPHICS-PROCESSING
UNIT

183
3D DATA
GENERATION UNIT

184
DISPLAY
CONTROL UNIT

185
OPERATION-PROCESSING
UNIT

# FIG. 6

START

↓ S100

ACQUIRE VIDEO

↓ S101

ACQUIRE TYPE INFORMATION OF INSPECTION EQUIPMENT

↓ S102

ACQUIRE SETTING INFORMATION INDICATING SUPERIMPOSITION STATE OF GRAPHICS INFORMATION

↓ S103

IS GRAPHICS INFORMATION SUPERIMPOSED?

NO →

YES ↓ S104

ACQUIRE INFORMATION INDICATING SUPERIMPOSITION STATE OF SUB-GRAPHICS INFORMATION

↓ S105

DETERMINE WHETHER SUB-GRAPHICS INFORMATION IS SUPERIMPOSED

↓ S106

IDENTIFY GRAPHICS REGION

↓ S107

SET GRAPHICS REGION AS INEFFECTIVE REGION

↓ S108

EXECUTE 3D RECONSTRUCTION PROCESSING

↓ S109

DISPLAY IMAGE OF 3D DATA

↓

END

FIG. 7

| ITEM | | VALUE | |
|---|---|---|---|
| TYPE OF INSPECTION EQUIPMENT | | EQUIPMENT A | ~ IF1 |
| GRAPHICS INFORMATION | | AVAILABLE | ~ SI1 |
| SUB-GRAPHICS | OPTICAL ADAPTOR TYPE | NONAVAILABLE | ~ SI2 |
| | BRIGHTNESS | NONAVAILABLE | ~ SI3 |
| | DATE | AVAILABLE | ~ SI4 |
| | COMPANY LOGO | AVAILABLE | ~ SI5 |
| | ZOOM STATE | AVAILABLE | ~ SI6 |

# FIG. 8

| TYPE | OPTICAL ADAPTOR TYPE | BRIGHTNESS | DATE | COMPANY LOGO | ZOOM STATE |
|------|---------------------|------------|------|--------------|------------|
| EQUIPMENT A | TopLeft: (Aa1, Ab1)<br>Width : Aw1<br>Height : Ah1 | TopLeft: (Aa2, Ab2)<br>Width : Aw2<br>Height : Ah2 | TopLeft: (Aa3, Ab3)<br>Width : Aw3<br>Height : Ah3 | TopLeft: (Aa4, Ab4)<br>Width : Aw4<br>Height : Ah4 | TopLeft: (Aa5, Ab5)<br>Width : Aw5<br>Height : Ah5 |
| EQUIPMENT B | TopLeft: (Ba1, Ab1)<br>Width : Bw1<br>Height : Bh1 | TopLeft: (Ba2, Bb2)<br>Width : Bw2<br>Height : Bh2 | TopLeft: (Ba3, Bb3)<br>Width : Bw3<br>Height : Bh3 | TopLeft: (Ba4, Bb4)<br>Width : Bw4<br>Height : Bh4 | TopLeft: (Ba5, Bb5)<br>Width : Bw5<br>Height : Bh5 |
| EQUIPMENT C | TopLeft: (Ca1, Cb1)<br>Width : Cw1<br>Height : Ch1 | TopLeft: (Ca2, Cb2)<br>Width : Cw2<br>Height : Ch2 | TopLeft: (Ca3, Cb3)<br>Width : Cw3<br>Height : Ch3 | TopLeft: (Ca4, Cb4)<br>Width : Cw4<br>Height : Ch4 | TopLeft: (Ca5, Cb5)<br>Width : Cw5<br>Height : Ch5 |
| ... | ... | ... | ... | ... | ... |

IF2　C1　C2　C3　C4　C5

EP 4 528 641 A1

# FIG. 9

# FIG. 10

FIG. 11

FIG. 12

EP 4 528 641 A1

## FIG. 13

```
                    ┌──────────┐
                    │  START   │
                    └──────────┘
                         │
                         ▼
        ┌─────────────────────────────────┐
        │   EXECUTE FEATURE POINT         │── S108a
        │   DETECTION PROCESSING          │
        └─────────────────────────────────┘
                         │
                         ▼
        ┌─────────────────────────────────┐
        │   EXECUTE FEATURE POINT         │── S108b
        │   ASSOCIATION PROCESSING        │
        └─────────────────────────────────┘
                         │
                         ▼
        ┌─────────────────────────────────┐
        │ EXECUTE POSITION-AND-ORIENTATION│── S108c
        │   CALCULATION PROCESSING        │
        └─────────────────────────────────┘
                         │
                         ▼
        ┌─────────────────────────────────┐
        │ EXECUTE THREE-DIMENSIONAL SHAPE │── S108d
        │   RECONSTRUCTION PROCESSING     │
        └─────────────────────────────────┘
                         │
                         ▼
        ┌─────────────────────────────────┐
        │ EXECUTE SCALE CONVERSION PROCESSING│── S108e
        └─────────────────────────────────┘
                         │
                         ▼
                    ┌──────────┐
                    │   END    │
                    └──────────┘
```

## FIG. 14

FIG. 15

INSPECTION EQUIPMENT TYPE

EQUIPMENT B

GRAPHICS REGION

CB1 ☑ BRIGHTNESS

CB2 ☑ COMPANY LOGO

CB3 ☑ DATE

CB4 ☐ OPTICAL ADAPTOR TYPE

CB5 ☐ ZOOM

SC3

PM1

FIG. 16

EP 4 528 641 A1

FIG. 17

EXTERNAL DEVICE

6

DATA COMMUNICATION UNIT
60

CPU
61

DISPLAY UNIT
62

RAM
63

FIG. 18

START

RECEIVE TYPE OF INSPECTION EQUIPMENT ~S110

RECEIVE SETTING OF GRAPHICS INFORMATION ~S111

RECEIVE SETTING OF SUB-GRAPHICS INFORMATION ~S112

GENERATE VIDEO ~S113

ASSOCIATE TYPE INFORMATION AND SETTING INFORMATION WITH VIDEO ~S114

TRANSMIT VIDEO TO EXTERNAL DEVICE ~S115

END

# FIG. 19

START

RECEIVE VIDEO FROM ENDOSCOPE DEVICE — S200

RECORD VIDEO — S201

ACQUIRE VIDEO — S202

ACQUIRE TYPE INFORMATION OF INSPECTION EQUIPMENT — S203

ACQUIRE SETTING INFORMATION INDICATING SUPERIMPOSITION STATE OF GRAPHICS INFORMATION — S204

S205
IS GRAPHICS INFORMATION SUPERIMPOSED ?

NO

YES

ACQUIRE INFORMATION INDICATING SUPERIMPOSITION STATE OF SUB-GRAPHICS INFORMATION — S206

DETERMINE WHETHER SUB-GRAPHICS INFORMATION IS SUPERIMPOSED — S207

IDENTIFY GRAPHICS REGION — S208

SET GRAPHICS REGION AS INEFFECTIVE REGION — S209

EXECUTE 3D RECONSTRUCTION PROCESSING — S210

DISPLAY IMAGE OF 3D DATA — S211

END

Europäisches
Patentamt
European
Patent Office
Office européen
des brevets

# EUROPEAN SEARCH REPORT

**Application Number**

EP 24 20 0061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/244260 A1 (UYAMA KEISUKE [JP] ET AL) 12 August 2021 (2021-08-12) * paragraphs [0006], [0032] - [0034], [0044] - [0047], [0055] - [0063], [0082] - [0086]; figures 3,6,7 * | 1-23 | INV. G06T7/579 G06T7/00 |
| A,D | US 2020/265635 A1 (ENDO NAOFUMI [JP]) 20 August 2020 (2020-08-20) * paragraph [0183]; figures 3,4 * | 1-23 | |

**TECHNICAL FIELDS SEARCHED (IPC)**

G06T

The present search report has been drawn up for all claims

| Place of search | Date of completion of the search | Examiner |
|---|---|---|
| Munich | 30 January 2025 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0061

This annex lists the patent family members relating to the patent documents cited in  the above-mentioned European search report.
The members are as contained in the European Patent Office EDP file on
The European Patent Office is in no way liable for these particulars which are merely given for the purpose of information.

30-01-2025

| Patent document cited in search report | | Publication date | Patent family member(s) | | | Publication date |
|---|---|---|---|---|---|---|
| US 2021244260 | A1 | 12-08-2021 | CN | 112654280 | A | 13-04-2021 |
| | | | EP | 3851024 | A1 | 21-07-2021 |
| | | | JP | 7444065 | B2 | 06-03-2024 |
| | | | JP | 2024051017 | A | 10-04-2024 |
| | | | JP | WO2020054566 | A1 | 30-08-2021 |
| | | | US | 2021244260 | A1 | 12-08-2021 |
| | | | US | 2024252019 | A1 | 01-08-2024 |
| | | | WO | 2020054566 | A1 | 19-03-2020 |
| US 2020265635 | A1 | 20-08-2020 | JP | 2020134242 | A | 31-08-2020 |
| | | | US | 2020265635 | A1 | 20-08-2020 |

For more details about this annex : see Official Journal of the European Patent Office, No. 12/82

**REFERENCES CITED IN THE DESCRIPTION**

**Patent documents cited in the description**

• JP 2020134242 A